# EUROPÄISCHE PATENTSCHRIFT

(11) **EP 3 839 803 B1**
(45) Veröffentlichungstag und Bekanntmachung des Hinweises auf die Patenterteilung: **12.11.2025**
(21) Anmeldenummer: 19217177.5
(22) Anmeldetag: 17.12.2019
(51) Int. Cl.: A47F 9/04, G06V 10/44, G06V 10/764, G06V 20/52, G07G 1/00, G07G 3/00

(54) **VERFAHREN, STEUERVORRICHTUNG UND REGISTRIERTERMINAL ZUM RECHNERGESTÜTZTEN LEER-ERKENNEN EINES TRANSPORTBEHÄLTERS**
METHOD, CONTROL DEVICE AND REGISTRATION TERMINAL FOR COMPUTER-ASSISTED RECOGNITION OF EMPTY TRANSPORT CONTAINERS
PROCÉDÉ, DISPOSITIF DE COMMANDE ET TERMINAL D'ENREGISTREMENT POUR LA RECONNAISSANCE ASSISTÉE PAR ORDINATEUR DE RÉCIPIENTS DE TRANSPORT VIDES

(43) Veröffentlichungstag der Anmeldung: 23.06.2021
(73) Patentinhaber: Diebold Nixdorf Systems GmbH, 33106 Paderborn (DE)
(72) Erfinder: SOMMER, Martin, 13467 Berlin (DE); KNOBLOCH, Alexander, 33100 Paderborn (DE); ENGELNKEMPER, Sebastian, 33449 Langenberg (DE)

(56) Entgegenhaltungen:
- EP-A1- 3 211 611
- DE-A1- 102012 103 163
- US-A1- 2008 226 129

## Beschreibung

Verschiedene Ausführungsbeispiele betreffen ein Verfahren zum rechnergestützten Leer-Erkennen eines Transportbehälters, eine Steuervorrichtung und ein Registrierterminal.

Im Allgemeinen können Transportbehälter verwendet werden, um Gegenstände zu transportieren, z.B. Waren im Bereich der Produktion oder des Verkaufs. Dabei kann es nötig sein, zu erkennen, ob und gegebenenfalls was sich in dem Transportbehälter befindet, z.B. bei der Registrierung von Waren an einem Kassenausgang (dies kann auch als "Bottom of Basket" Erkennung bezeichnet werden - BoB). Damit können Kosten verringert werden, welche entstehen, wenn unregistrierte Waren unerkannt den Kassenausgang passieren (dies kann auch als Verlustprävention bezeichnet werden).

Verglichen mit nicht-rechnergestützten Verfahren, wie die Verwendung von Deckenspiegeln, ID-Nummern am Fahrgestell des Einkaufswagens oder Videowiedergaben auf dem Monitor des Kassierers, verlangen rechnergestützte Verfahren weniger Aufmerksamkeit des Kassierers und belasten dessen Leistungsfähigkeit daher weniger, sind zuverlässiger und weniger fehleranfällig.

Herkömmlicherweise werden rechnergestützte Verfahren der Mustererkennung verwendet, um in dem Transportbehälter angeordnete Gegenstände zu identifizieren. Beispielhaft sei dazu die EP 3 211 611 A1 erwähnt. Zur Erkennung von nicht-leeren Einkaufswagen erfolgt beispielsweise eine Identifikation von Artikeln auf der Wagenablage via Objekterkennung der Artikel oder via Bildvergleich mit leeren Einkaufswagen. Zur Identifikation von Artikeln werden markante Muster der Artikel erkannt und mit einer Datenbank abgeglichen, in welcher die Muster bekannter Artikel gespeichert sind.

Diesen rechnergestützten Verfahren ist gemeinsam, dass sie aufgrund der angewendeten Bildverarbeitung bzw. Mustererkennung sehr viel Rechenleistung benötigen, zur Fehleranfälligkeit neigen und an das Sortiment bzw. den Wagentypen angepasst sein müssen, d.h. an anderer Stelle den personellen Aufwand vergrößern.

Die sich daraus ergebende Aufgabe wird gelöst von dem Gegenstand der beigefügten Ansprüche.

Demgegenüber werden gemäß verschiedenen Ausführungsformen ein Verfahren zum rechnergestützten Leer-Erkennen eines Transportbehälters, eine Steuervorrichtung bzw. ein Registrierterminal mit dieser zum Durchführen des Verfahrens bereitgestellt, welche weniger Rechenleistung erfordern, die Fehleranfälligkeit verringern, robuster gegenüber Störungen sind und weniger Anpassungen erfordern.

Anschaulich wird gemäß verschiedenen Ausführungsformen ein Verfahren zum rechnergestützten Leer-Erkennen eines Transportbehälters bereitgestellt, welches die Komplexität der zu berücksichtigenden Bilddaten, beispielsweise mittels einer Kamera aufgenommener Bilddaten des (möglicherweise mit einem oder mehreren Gegenständen gefüllten) Transportbehälters, reduziert. Dies erreicht, dass weniger Rechenleistung benötigt wird und schlankere Algorithmen verwendet werden können.

Anschaulich werden Segmente der Bilddaten herausgefiltert (und z.B. verworfen), bevor diese weiterverarbeitet werden, was die Komplexität der zu berücksichtigenden Bilddaten reduziert. Das Filtern kann aufweisen, diejenigen Segmente der Bilddaten zu verwerfen, welche beispielsweise nicht zu dem Transportbehälter sondern zu einem Hintergrund (auch als Bild-Hintergrund bezeichnet) des Transportbehälters gehören, so dass diese zum Leer-Erkennen nicht berücksichtigt werden. Das Ermitteln der nicht zu berücksichtigenden Segmente der Bilddaten erfolgt unter Verwendung von Tiefeninformationen (auch als Tiefensegmentieren bezeichnet). Beispielsweise werden die Bilddaten pixelweise gemäß ihrer Tiefenwerte aussortiert. Dies erreicht, dass diejenigen Segmente der Bilddaten, welche beispielsweise räumliche Bereiche unterhalb des Warenkorbs zeigen, herausgefiltert werden. Dieser Mechanismus basiert beispielsweise nur auf den Tiefeninformationen ohne den Bildinhalt zu berücksichtigen und ist daher nur von den räumlichen Gegebenheiten abhängig. Dies erreicht eine hohe Robustheit und Zuverlässigkeit des Tiefensegmentierens.

Es zeigen
- Figur 1: ein Verfahren gemäß verschiedenen Ausführungsformen in einem schematischen Ablaufdiagramm;
- Figur 2: ein Registrierterminal gemäß verschiedenen Ausführungsformen in einem schematischen Aufbaudiagramm;
- Figur 3: ein Registrierterminal gemäß verschiedenen Ausführungsformen in einem schematischen Kommunikationsdiagramm;
- Figur 4: ein Registrierterminal gemäß verschiedenen Ausführungsformen in einer schematischen Seitenansicht;
- Figuren 5, 6 und 7: jeweils ein Verfahren gemäß verschiedenen Ausführungsformen in einem schematischen Ablaufdiagramm;
- Figur 8 und 10: jeweils einen Klassifikator gemäß verschiedenen Ausführungsformen in einem schematischen Aufbaudiagramm; und
- Figur 9: ein Registrierterminal in dem Verfahren gemäß verschiedenen Ausführungsformen in einer schematischen Seitenansicht.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer kommunikationsfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Der Begriff "Steuervorrichtung" kann als jede Art einer Logik implementierenden Entität verstanden werden, die beispielsweise eine Verschaltung und/oder einen Prozessor aufweisen kann, welche Software ausführen kann, die in einem Speichermedium, in einer Firmware oder in einer Kombination davon gespeichert ist, und darauf basierend Anweisungen ausgeben kann. Die Steuervorrichtung kann beispielsweise mittels Codesegmenten (z.B. Software) konfiguriert sein, um den Betrieb eines Systems (z.B. seines Arbeitspunkts), z.B. einer Maschine oder einer Anlage, z.B. deren Komponenten, zu steuern.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden. Der Prozessor kann daher eingerichtet sein, eines der hierin beschriebenen Verfahren oder dessen Komponenten zur Informationsverarbeitung durchzuführen.

Gemäß verschiedenen Ausführungsformen kann ein Datenspeicher (allgemeiner auch als Speichermedium bezeichnet) ein nichtflüchtiger Datenspeicher sein. Der Datenspeicher kann beispielsweise eine Festplatte und/oder zumindest einen Halbleiterspeicher (wie z.B. Nur-Lese-Speicher, Direktzugriffsspeicher und/oder Flash-Speicher) aufweisen oder daraus gebildet sein. Der Nur-Lese-Speicher kann beispielsweise ein löschbarer programmierbarer Nur-Lese-Speicher (kann auch als EPROM bezeichnet werden) sein. Der Direktzugriffsspeicher kann ein nichtflüchtiger Direktzugriffsspeicher (kann auch als NVRAM -"non-volatile random access memory" bezeichnet werden) sein. Beispielsweise kann in dem Datenspeicher eines oder mehr als eines von Folgendem gespeichert werden: eine Datenbank (kann auch als Referenzdatenbank bezeichnet werden), einen Verarbeitungsalgorithmus; ein Kriterium; Codesegmente, die einen oder mehr als einen Verarbeitungsalgorithmus (vereinfacht auch als Algorithmus bezeichnet) implementieren. Die Datenbank kann einen oder mehrere Datensätze aufweisen, von denen jeder Datensatz eine Produktkennung einer Zahlungsinformation zuordnet.

Hierin wird sich unter anderem auf ein künstliches neuronales Netz (kNN) bezogen. Das Beschriebene kann in Analogie gelten, wenn alternativ oder zusätzlich zu dem kNN ein anderer trainierbarer Algorithmus verwendet wird, z.B. eine Stützvektormaschine (auch als Support-Vektor-Maschinen bezeichnet) oder ein langes Kurzzeitgedächtnis (auch als Long-Short-Term-Memory oder LSTM bezeichnet). Das kNN kann eine Vielzahl von Knoten (anschaulich künstliche Neuronen) und ein Verbindungsnetz (die Zuordnung von Verbindungen zu Knoten) aufweisen. Anschaulich werden bei einem kNN analog zu biologischen Neuronen die Prozesse zur Informationsaufnahme und Informationsverarbeitung nachgebildet. Dies wird über eine von den Gegebenheiten abhängige Anzahl von Schichten versteckter Neuronen und die Signale übertragenden Aktivierungsfunktionen realisiert.

Die Topologie des Algorithmus beschreibt die Struktur des Verbindungsnetzes, d.h., wie viele Knoten sich auf wie vielen Schichten verteilen, und wie diese untereinander verbunden sind. Beispielsweise können mehrere Knoten in hintereinander liegenden Schichten angeordnet werden, deren erste Schicht den Eingang des Algorithmus und deren letzte Schicht den Ausgang des Algorithmus bildet. Die letzte Schicht, deren Ausgabe überhaupt außerhalb des Verbindungsnetzes sichtbar wird, wird Ausgabeschicht genannt. Davorliegende Schichten werden entsprechend als verdeckte Schicht bezeichnet. Unter Verwendung eines Graphen können die künstlichen Neuronen als Knoten und ihre Verbindungen als Kanten dargestellt werden. Der Algorithmus ist in diesem Fall beispielhaft ein gerichteter Graph mit typisierten Knoten.

Nach der Konstruktion des Algorithmus wird dieser zunächst trainiert (auch als Trainingsphase bezeichnet), in welcher der Algorithmus auf die anzutrainierende Arbeitsweise angepasst wird (anschaulich "lernt"). Dazu werden dem Algorithmus Daten (die Trainingsdaten) zugeführt, auf dessen Grundlage der Algorithmus lernt, die gewünschte Arbeitsweise nachzubilden. Eine zutreffende Ausgabe des Algorithmus verstärkt dabei das Erlernte (d.h. einen bestimmten Signalpfad durch das Verbindungsnetz hindurch), wohingegen eine unzutreffende Ausgabe den Signalpfad abschwächt. Auf diese Weise bilden sich nach und nach diejenigen Pfade durch das Verbindungsnetz heraus, welche die gewünschte Arbeitsweise am besten beschreiben.

In der Trainingsphase kann einer oder mehr als einer der folgenden Vorgänge erfolgen: Modifizieren des Verbindungsnetzes (z.B. Bilden oder Löschen von Verbindungen); Ändern der Gewichtung von Knoten; Modifizieren der Eigenschaften (z.B. Schwellenwerte) der Knoten; Modifizieren der Anzahl von Knoten; Modifikation von Aktivierungs-, Propagierungs- und/oder Ausgabefunktion.

Im Training des Algorithmus (z.B. des kNN) werden die Trainingsdaten gemäß den jeweils gewünschten Eingangsparametern ausgewählt. In einem Beispiel weisen die eingehenden Trainingsdaten Bilddaten des Erfassungsbereichs auf, von denen die jeweilige Zielgröße (z.B. Klasse oder zu erkennende Objekte) bekannt ist. Die Trainingsdaten können beispielsweise über Zeitstempel oder deren Herkunft synchronisiert und/oder in Beziehung zueinander gesetzt werden. Es ist darauf hinzuweisen, dass sowohl die im Eingangsvektor des Algorithmus enthaltenen Parameter als auch die im Ausgangsvektor des Algorithmus enthaltenen Parameter stark anwendungsabhängig sind und entsprechend ausgewählt werden.

Im Folgenden wird sich auf Bilddaten und deren Verarbeitung bezogen. Die Bilddaten können ein digitales Abbild der Realität (z.B. des Erfassungsbereichs) zu einem Zeitpunkt des Erfassens der Bilddaten sein. Die Abbildung der Realität kann beispielsweise mittels eines Objektivs erfolgen, welches Licht auf die Oberfläche eines Bilderfassungssensors (z.B. eines Bayer-Sensors) projiziert. Das Erfassen der Bilddaten kann aufweisen, den Bilderfassungssensor auszulesen während das Licht auf dessen Oberfläche projiziert wird. Die so erhaltenen Bilddaten können zunächst im sogenannten Rohdatenformat (auch als RAW bezeichnet) sein, welches pixelweise die ausgelesenen Messwerte des Bilderfassungssensors aufweist und/oder als solche verarbeitet werden. Die Bilddaten können optional beim Verarbeiten in ein anderes Bildformat überführt sein oder werden, z.B. in eine Rastergrafik (verschieden von RAW als Rastergrafik) oder eine Vektorgrafik, so dass deren weitere Verarbeitung in diesem Bildformat erfolgt, oder können beliebig zwischen diesen umgewandelt werden. Das Überführen kann optional aufweisen, die Messwerte des Bilderfassungssensors zu interpolieren (z.B. mittels Demosaickings), z.B. um vollständige mehrfarbige Farbinformationen für jedes Pixel zu erhalten oder um weniger Speicherplatz bzw. Rechenleistung zu benötigen. Die Bilddaten können optional komprimiert (z.B. um weniger Speicherplatz bzw. Rechenleistung zu benötigen) oder unkomprimiert (z.B. um Verfälschungen zu vermeiden) sein. Das jeweilige Bildformat kann auch den Farbraum definieren, gemäß dem die Farbinformationen angegeben sind.

Der einfachste Fall ist ein Binär-Farbraum, bei dem pro Pixel ein Schwarzweiß-Wert abgespeichert wird. Bei einem etwas komplexeren Farbraum (auch als Graustufen-Farbraum bezeichnet) werden Zwischenstufen zwischen Schwarz und Weiß abgespeichert (auch als Grauwerte bezeichnet). Der Farbraum kann aber auch von mehreren (z.B. zwei oder mehr) Grundfarben aufgespannt werden, wie beispielsweise rot, grün und blau. Sollen die Messwerte beispielsweise mehrfarbige Farbinformationen aufweisen, kann ein wellenlängensensitiver Bilderfassungssensor verwendet werden. Dessen Messwerte können beispielsweise gemäß einem Farbraum kodiert sein. Die Farbinformationen bzw. der zugrundeliegende Farbraum können daher mehrfarbig (auch als polychrom bezeichnet) oder auch einfarbig (auch als monochrom bezeichnet) sein. Die monochrome Farbinformationen kann beispielsweise nur Grauwerte aufweisen (dann auch als Grauwertinformationen bezeichnet) oder Schwarzweiß-Werte aufweisen (dann auch als Schwarzweißwertinformationen bezeichnet), welche die Intensität der erfassten Strahlung bei der Wellenlänge bzw. dem Wellenlängenbereich repräsentieren, bei welcher der monochrome Sensor sensitiv ist. Für eine visuelle Wiedergabe der Bilddaten auf einer Anzeigevorrichtung werden diese in dasjenige Bildformat überführt, das vom Bildspeicher der Grafikkarte vorgegeben ist. Die hierin beschriebenen Bilddaten werden zum einfacheren Verständnis als eine solche visuelle Wiedergabe dargestellt. Im Allgemeinen können die Bilddaten, z.B. abgelegt in einem Speichermedium, als Datei (auch als digitales Bild oder Bilddatei bezeichnet) in dem jeweiligen Bildformat vorliegen.

Den Bilddaten können ferner (z.B. alternativ oder zusätzlich zu den Farbinformationen) Tiefeninformationen (auch als 3D-Informationen bezeichnet) zugeordnet sein. Zum Erfassen der Tiefeninformationen kann eine sogenannte 3D-Kamera verwendet werden, wie später noch genauer beschrieben wird. Die Messwerte der 3D-Kamera können (z.B. pixelweise) Informationen zu einer Topografie der abgebildeten Realität (auch als Tiefeninformationen bezeichnet) aufweisen. Beispielsweise können die Tiefeninformationen angeben, welchen Abstand ein oder jedes Pixel der Kamera von einem Ort im Raum aufweist, der auf das Pixel abgebildet wird.

Die Tiefeninformationen können anschaulich den von den Bilddaten abgebildeten zwei räumlichen Dimensionen eine dritte räumliche Dimension (hierin als Tiefe bezeichnet) hinzufügen. Beispielsweise kann ein Objekt mittels der Bilddaten als Projektion auf die zweidimensionale Oberfläche des Bildsensors repräsentiert sein (auch als 2D-Bilddaten bezeichnet). Die Tiefeninformationen spannen hierzu die dritte räumliche Dimension auf. Beispielsweise können die Tiefeninformationen den Bilddaten segmentweise (d.h. für jedes Segment der Bilddaten) zugeordnete Werte (auch als Tiefenwerte bezeichnet) aufweisen, welche deren Tiefe angeben. Die Tiefeninformationen weisen den Bilddaten pixelweise (d.h. für jedes Pixel der Bilddaten) zugeordnete Tiefenwerte auf, welche die Tiefe angeben.

Die Bilddaten werden unter Verwendung der Tiefeninformationen segmentiert, z.B. indem die Bilddaten in Segmente (z.B. Pixel) zweier Typen unterteilt werden, abhängig davon, ob die den Segmenten zugeordneten Tiefenwerte ein Kriterium erfüllen oder nicht. Beispielsweise können die Tiefenwerte der Segmente eines ersten Typs das Kriterium erfüllen und die Tiefenwerte der Segmente eines zweiten Typs das Kriterium nicht erfüllen. Optional können mehr als zwei Typen verwendet werden, wenn beispielsweise mehr als ein Kriterium verwendet wird. Die Grenzen zwischen den Segmenten der Bilddaten verlaufen entlang derjenigen Tiefenwerte, die im Wesentlichen dem Kriterium entsprechen.

Gemäß verschiedenen Ausführungsformen werden die Tiefeninformationen mittels einer dreidimensionalen (3D) Bilderfassung gewonnen. Die Tiefeninformationen können beispielsweise verwendet werden, um zu erkennen, ob sich ein Objekt oberhalb einer Referenzebene befindet. Somit kann unterschieden werden, in welchem räumlichen Abstand sich ein Objekt von der Referenzebene befindet. Beispielsweise können die Tiefeninformationen durch den gesamten Erfassungsbereich hindurch gewonnen werden, so dass anschaulich von oben erkannt werden kann, in welcher räumlichen Position sich ein oder mehr als ein Objekt relativ zu der Referenzebene befindet.

Gemäß verschiedenen Ausführungsformen kann die Bilderfassungsvorrichtung Bilddaten des Erfassungsbereichs aus mehreren optischen Perspektiven (z.B. mittels mehrerer Objektive bereitgestellt) bereitstellen, welche Tiefeninformationen des Erfassungsbereichs repräsentieren (z.B. stereoskopisch). Zum Ermitteln der Tiefeninformationen können die Bilddaten, welche aus unterschiedlichen Perspektiven (z.B. mittels mehrerer Objektive) erfasst werden, einander überlagert werden, z.B. unter Berücksichtigung einer relativen räumlichen Lage (Position und/oder Ausrichtung) der Objektive zueinander. Eine Kamera kann einen (optischen) Bilderfassungssensor aufweisen und zumindest ein dem Bilderfassungssensor zugeordnetes Objektiv (auch als Linsenanordnung bezeichnet). Die Linsenanordnung einer plenoptischen Kamera kann auch ein Gitter aus mehreren Mikrolinsen aufweisen. Beispielsweise kann die Bilderfassungsvorrichtung (z.B. RealSense F200, INTEL R200 Intel RealSense D415, Intel RealSense D435 und/oder Intel SR300) einen RGB-Bilderfassungssensor und/oder einen 3D-Bilderfassungssensor aufweisen.

Ein Bilderfassungssensor (auch als Bildsensor oder optischer Sensor bezeichnet) kann einen oder mehrere photoelektrisch aktive Bereiche (kann auch als Pixel bezeichnet werden) aufweisen, welche z.B. in Antwort auf eine elektromagnetische Strahlung (z.B. Licht, z.B. sichtbares Licht) ein elektrisches Signal erzeugen und/oder modifizieren. Der Bilderfassungssensor kann beispielsweise ein CCD-Sensor (charge-coupled device Sensor) und/oder einen aktiven Pixelsensor (kann auch als CMOS-Sensor bezeichnet werden) aufweisen oder daraus gebildet sein. Optional kann ein Bilderfassungssensor wellenlängensensitiv eingerichtet sein (z.B. zum Erfassen von Farbinformationen), z.B. mittels mehrerer Farbfilter (z.B. in Gitterform), und so zwischen verschiedenen Wellenlängen unterscheiden.

Die Tiefeninformationen können quantifiziert sein, z.B. unter Angabe der Tiefe als Wert (auch als Tiefenwert bezeichnet), kodiert sein oder selbst mittels Bilddaten bereitgestellt sein, z.B. indem aus einer anderen Perspektive gleichzeitig erfasste Bilddaten (z.B. separat voneinander oder einander überlagert) zugeordnet werden. Die mehreren gleichzeitig erfassten Perspektiven können beispielsweise einander überlagert werden, um die Tiefeninformationen zu quantifizieren. Jeder Tiefenwert der Tiefeninformationen kann dann beispielsweise zu einer Abweichung zwischen den mehreren gleichzeitig erfassten Perspektiven korrespondieren.

Durch eine 3D-basierte Segmentierung der Bilddaten und Klassifikation durch ein kNN kann das leer-Erkennen vereinfacht werden. So kann zum einen der Fall des Betrugs detektiert werden und zum anderen der Gesamtprozess auf Abweichungen vom Normalverhalten analysiert werden. Damit kann der gesamte Registriervorgang (auch als Checkout-Prozess bezeichnet) optional nach seiner Verdächtigkeit bewerten werden und/oder optional ein Mitarbeiter informiert werden.

Aufgrund der Vorverarbeitung der Bilddaten durch eine tiefenbasierte Segmentierung sowie eine gezielte Optimierung der Architektur des kNN auf die gegebene Problemstellung können im Vergleich zu herkömmlichen Mechanismen sehr hohe Erkennungsraten erreicht werden. Alternativ oder zusätzlich können aufgrund der Vorverarbeitung der Bilddaten durch eine tiefenbasierte Segmentierung (auch als Tiefensegmentieren bezeichnet) sowie eine gezielte Optimierung der Architektur des kNN auf die gegebene Problemstellung im Vergleich zu herkömmlichen Mechanismen eine kosteneffektivere Hardware ermöglichen. Anschaulich ist weniger Rechenleistung nötig, um hohe Erkennungsraten zu erreichen.

Gemäß verschiedenen Ausführungsformen kann ein Registrierterminal eingerichtet sein, die Produkte, die ein Kunde erwerben will, zu registrieren, z.B. mittels Scannens der Produkte an einem Scanner (z.B. einen Barcodescanner) zu erfassen. Ferner kann das Registrierterminal ein (z.B. digitales) Kassensystem aufweisen (beispielsweise eine Selbstbedienungskasse oder einen Kassierer-Arbeitsplatz aufweisend), welches eingerichtet ist, einen Bezahlprozess durchzuführen. Der Bezahlprozess kann beispielsweise aufweisen, dass der Kunde die zu erwerbenden Produkte auch bezahlt. Das Kassensystem kann zumindest eines von Folgendem aufweisen: einen Bildschirm (z.B. einen berührungsempfindlichen Bildschirm), einen Drucker (z.B. zum Ausdrucken einer Rechnung und/oder eines Etiketts), eine (z.B. programmierbare) Kassentastatur (kann auch Teil des berührungsempfindlichen Bildschirms sein), ein Zahlungsmittel-Terminal zum Annehmen eines Zahlungsmittels (z.B. Bargeld oder eine Debitkarte). Das Zahlungsmittel-Terminal kann beispielsweise ein Elektronisch-Zahlungsmittel-Terminal (kann auch als EC-Terminal oder elektronisches Zahlungsmittel-Terminal bezeichnet werden, "EC" - electronic cash, z.B. zum Auslesen einer Debitkarte und/oder einer Kreditkarte) sein. Beispielsweise kann das Registrierterminal ein (z.B. digitales) Kassensystem aufweisen, welches eingerichtet ist, einen oder mehrere Kassensystem-Prozesse durchzuführen, wie beispielsweise eine Registriersitzung. Eine Registriersitzung kann beispielsweise einen Berechnungsprozess, einen Inventarprozess und/oder einen Registrierprozess aufweisen.

Bei einem Selbstbedienung-Registrierterminal können das Kassensystem und der Scanner auf derselben Seite (z.B. einer Säule) des Registrierterminals angeordnet sein, so dass diese von einer Position aus bedient werden können. Bei einem nicht-Selbstbedienung-Registrierterminal (auch als Kassierer-Registrierterminal bezeichnet) können das Kassensystem und der Scanner von unterschiedlichen Seiten aus bedienbar sein.

Im Folgenden wird sich auf Produkte (z.B. Waren, kann auch als Artikel bezeichnet werden) als Objekte bezogen. Das Beschriebene kann in Analogie auch für andere Objekte gelten, die in einem Transportbehälter transportiert werden können.

Gemäß verschiedenen Ausführungsformen kann eine Erkennung von verbliebenen Gegenständen im Inneren des Transportbehälters, z.B. auf einer unteren Kastenablage des Einkaufswagens, ermöglicht werden. Anschaulich kann gegenüber herkömmlicher Mustererkennung ein Erkennen, ob oder ob nicht ein Gegenstand (z.B. Ware, kann auch als Artikel bezeichnet werden) in dem Transportbehälter angeordnet ist, erleichtert werden. Diese Erkennung kann auf optischem Wege erfolgen, indem Bilddaten analysiert werden. Die Komplexität der Bilddaten kann gemäß verschiedenen Ausführungsformen reduziert werden, indem die Bildbestandteile, welche nur die Umgebung zeigen, mittels eines Abgleichs mit Tiefeninformationen herausgefiltert werden. Dies erreicht, dass die zu analysierende Datenmenge in ihrer Komplexität reduziert wird und weniger Störgrößen auftreten (die Menge an Daten kann beispielsweise gleich bleiben).

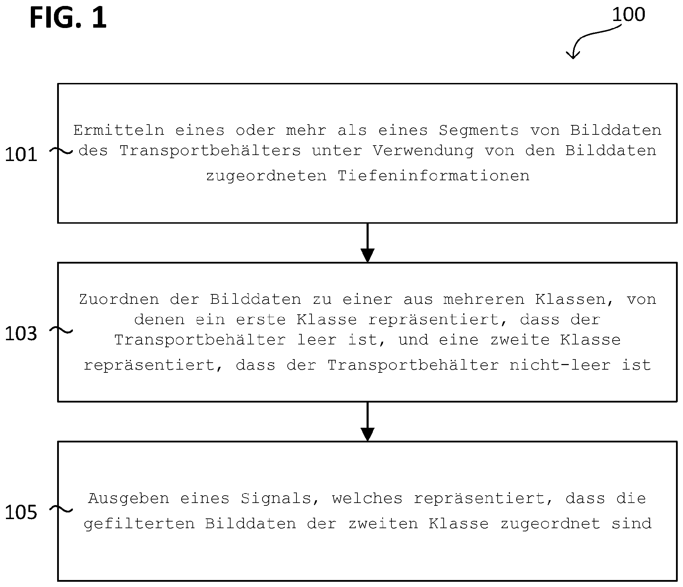

**Fig.1** veranschaulicht ein Verfahren 100 gemäß verschiedenen Ausführungsformen in einem schematischen Ablaufdiagramm.

Das Verfahren 100 weist auf, in 101, Ermitteln eines oder mehr als eines Segments von Bilddaten des Transportbehälters unter Verwendung von den Bilddaten zugeordneten Tiefeninformationen (auch als Tiefensegmentieren 101 bezeichnet); in 103, Zuordnen der Bilddaten zu einer aus mehreren Klassen (auch als Klassifizieren 103 bezeichnet), von denen eine erste Klasse repräsentiert, dass der Transportbehälter leer ist, und eine zweite Klasse repräsentiert, dass der Transportbehälter nicht-leer ist; und in 105, Ausgeben eines Signals, welches repräsentiert, dass die gefilterten Bilddaten der ersten Klasse und/oder der zweiten Klasse zugeordnet sind.

Das oder jedes Segment der Bilddaten (auch als Datensegment bezeichnet) weist ein oder mehr als ein Pixel auf.

Das Tiefensegmentieren kann beispielsweise aufweisen, eine Vielzahl von Datensegmenten (welche beispielsweise voneinander separiert sind) zu ermitteln, z.B. mindestens 5 Datensegmente, z.B. mindestens 10 Datensegmente, z.B. mindestens 50 Datensegmente.

Das eine oder mehr als eine ermittelte Datensegment kann beim Klassifizieren unberücksichtigt bleiben (auch als hierin anschaulich als Herausfiltern bezeichnet), z.B. indem dieses verworfen wird, maskiert wird, modifiziert wird, usw.. Mit anderen Worten kann das Herausfiltern das Tiefensegmentieren und ein selektives Klassifizieren aufweisen, welches bewirkt, dass das mittels des Tiefensegmentierens ermittelte Segment, beim Klassifizieren nicht berücksichtigt wird.

Beispiele, welche das Herausfiltern implementieren, weisen auf, dass das oder jedes mittels des Tiefensegmentierens ermittelte Datensegment:
- aus den Bildinformationen entfernt (d.h. verworfen) wird, bevor diese dem Klassifizieren zugeführt wird,
- maskiert (z.B. vor dem Klassifizieren verborgen wird) wird, bevor dieses dem Klassifizieren zugeführt wird,
- ersetzt (z.B. mit Pixeln einheitlicher Farbinformation) wird, bevor dieses dem Klassifizieren zugeführt wird,
- als nicht zu berücksichtigend markiert wird, bevor diese dem Klassifizieren zugeführt wird.

Es kann selbstverständlich auch ein anderer selektiver Mechanismus verwendet werden, der bewirkt, dass die Informationen des mittels des Tiefensegmentierens ermittelten Segments, nicht beim Klassifizieren berücksichtigt werden. Im Folgenden wird auf konkrete Implementierungen (z.B. unter anderem auf das Ersetzen und das Maskieren) des Herausfilterns Bezug genommen. Das Beschriebene kann in Analogie für einen anderen selektiven Mechanismus gelten, der bewirkt, dass die Informationen des mittels des Tiefensegmentierens ermittelten Segments, nicht beim Klassifizieren berücksichtigt werden.

Das Tiefensegmentieren 101 kann anschaulich erreichen, dass nur der Teil der Bilddaten, welche das Innere des Transportbehälters repräsentieren, dem Klassifizieren zugeführt werden. Mit anderen Worten kann der überwachte Bildbereich auf einen Interessensbereich (kann auch als "region of interest" - ROI oder Analysebereich bezeichnet werden), in dem das Innere des Transportbehälters angeordnet ist, eingegrenzt werden.

Das Klassifizieren 103 kann mittels eines Algorithmus erfolgen, welcher beispielsweise robust gegenüber einer Änderung des Typs des Transportbehälters (auch als Behälter-Typ bezeichnet) ist. Allerdings kann es beispielsweise erforderlich sein, grundverschiedene Behälter-Typen, z.B. sich voneinander im Material unterscheidend (z.B. Metall oder Kunststoff), separat voneinander anzulernen, wie später noch genauer beschrieben wird.

Das Durchführen des Verfahrens 100 kann optional in Antwort auf das Erfassen eines Ereignisses erfolgen, welches repräsentiert, dass ein Transportbehälter in dem räumlichen Bereich (auch als Erfassungsbereich bezeichnet), von dem die Bilddaten erfasst werden, anwesend ist. Das Erfassen des Ereignisses kann beispielsweise mittels einer Bewegungserkennung erfolgen. Die Bewegungserkennung kann beispielsweise auf Grundlage der Bilddaten und/oder mittels eines Bewegungssensors erfolgen. Das Ereignis kann ebenso den Beginn einer Registriersitzung aufweisen, wie später noch genauer beschrieben wird.

Alternativ dazu kann das Verfahren 100 zyklisch wiederholt werden (z.B. permanent), z.B. unabhängig davon, ob ein Transportbehälter anwesend ist.

In einer wenig komplexen Implementierung können die Tiefeninformationen mittels stereoskopischer Infrarotbilddaten ermittelt sein oder werden. Mit anderen Worten kann das Ermitteln von Tiefeninformationen mittels des Erfassens von Infrarotstrahlung erfolgen. Die Infrarotstrahlung kann eine Wellenlänge aufweisen in einem Bereich von ungefähr 700 nm (Nanometer) bis ungefähr 1400 nm (z.B. 1000 nm), z.B. ungefähr 900 nm. Es kann alternativ oder zusätzlich ein optisches Muster (z.B. Punktmuster) in den Erfassungsbereich hinein emittiert werden, auf dessen Grundlage die Tiefeninformation ermittelt wird.

Die Infrarotbilddaten können somit monochrom sein. Es können aber auch polychrome Bilddaten (d.h. Farbinformationen aufweisend), z.B. Rot-Gelb-Grün-Informationen, verwendet werden.

Das Tiefensegmentieren 101 kann beispielsweise (z.B. nur) auf die stereoskopischen Infrarotbilddaten angewendet werden, z.B. auf eine der mehreren Perspektiven der stereoskopischen Infrarotbilddaten. Allgemeiner gesprochen kann das Tiefensegmentieren 101 auf dieselben Sensordaten oder zumindest einen Teil dieser anwendet werden, auf deren Grundlage auch die Tiefeninformation ermittelt wird. Dies vereinfacht die nötige Bilderfassungsvorrichtung. Im Fall des optischen Musters kann beispielsweise nur eine Perspektive vorhanden sein, auf welche das Tiefensegmentieren 101 angewendet wird.

Wird den Bilddaten die zweite Klasse zugeordnet, können optional, z.B. in Antwort darauf, 2D-Bilddaten im sichtbaren Spektralbereich (z.B. in einem Bereich sein von ungefähr 380 nm bis ungefähr 780 nm) erfasst werden, welche beispielsweise als Videosignal oder Standbild ausgegeben werden. Anhand dieser kann ein Kassierer (oder ein anderer Mitarbeiter) das Ergebnis des Klassifizierens 103 überprüfen und gegebenenfalls quittieren (z.B. bestätigen oder verwerfen).

Indem das eine oder mehr als eine ermittelte Datensegment beim Klassifizieren 103 nicht berücksichtigt wird, wird der dem Klassifizieren zugeführte Informationsgehalt verringert (verglichen mit dem Zuführen der gesamten Bilddaten). Dies ermöglicht einen weniger komplexen Algorithmus zum Klassifizieren 103 zu verwenden, z.B. mit weniger Knoten und/oder weniger Rechenleistung benötigend.

Beispielsweise kann die Bildinformation im Tiefenbereich ab einem gewählten Abstand beschnitten werden, so dass ab einem vordefinierten (z.B. abgespeicherten) Tiefenwert die Bildinformationen gezielt nicht mehr in die Klassifizierung einfließen. Es wird für die Klassifizierung beispielsweise ein segmentiertes (Grayscale) Bild, z.B. ohne die Füße eines Benutzers, Räder des Behälters, etc. oder anderer Gegenstände/Strukturen unterhalb der unteren Ablage des Transportbehälters der Klassifizierung zuzuführen, Dies verhindert, dass am Untergrund bzw. unterhalb des Behälterinnenraums angeordnete Bildinhalte zu Fehlklassifizierungen führen. Beispielsweise können auch Fehlklassifizierungen durch unterschiedliche Texturen auf dem Untergrund unterhalb des Einkaufswagens vermieden werden.

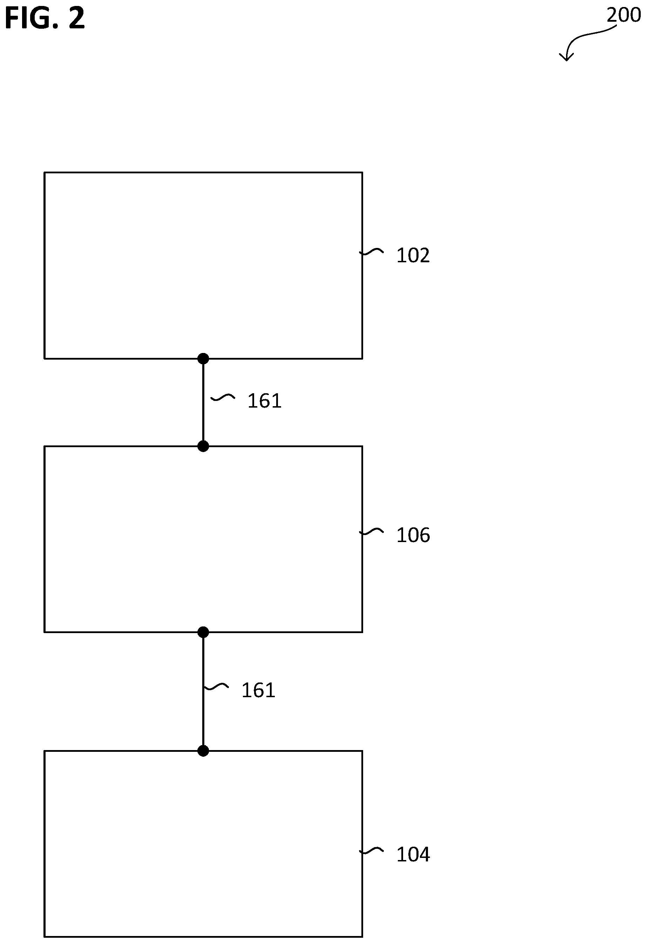

**Fig.2** veranschaulicht ein Registrierterminal 200 gemäß verschiedenen Ausführungsformen in einem schematischen Aufbaudiagramm. Das Registrierterminal 200 kann eine Bilderfassungsvorrichtung 102, eine Produkterfassungsvorrichtung 104 und eine Steuervorrichtung 106 aufweisen. Die Steuervorrichtung 106 kann mit der Bilderfassungsvorrichtung 102 und der Produkterfassungsvorrichtung 104 kommunikativ 161 gekoppelt sein, z.B. mittels eines Feldbus-Kommunikationsnetzwerks 161 oder eines anderen Datenbus 161. Für den Einsatz im Bereich der Automatisierungstechnik kann ein Feldbus-Kommunikationsnetzwerk verwendet werden. Im Bereich der Kassensysteme kann auch ein anderer Datenübertragungsweg 161 verwendet werden.

Die Bilderfassungsvorrichtung 102 kann eingerichtet sein, der Steuervorrichtung 106 Bilddaten des Erfassungsbereichs (z.B. im Rohdatenformat oder einer vorbearbeiteten Version des Rohdatenformats), z.B. pixelbasierte Bilddaten (auch als Rastergrafik bezeichnet), zuzuführen. Die Bilderfassungsvorrichtung 102 kann beispielsweise oberhalb des Erfassungsbereichs angeordnet sein. Die Bilderfassungsvorrichtung 102 kann beispielsweise eine oder mehr als eine Kamera aufweisen, wie später noch genauer beschrieben wird.

Die Produkterfassungsvorrichtung 104 kann eingerichtet sein, der Steuervorrichtung 106 eine von ihr erfasste Produktkennung zuzuführen. Die Produktkennung kann beispielsweise einem Produkt oder dessen Typ eindeutig zugeordnet sein. Die Produktkennung kann beispielsweise auf Grundlage eines optischen Merkmals (auch als Kennungsmerkmal bezeichnet) des Produkts, welches erfasst wird, ermittelt werden. Das Kennungsmerkmal (z.B. ein Muster) kann einen visuellen Code aufweisen, der die Produktkennung repräsentiert, z.B. einen Binärcode oder Ähnliches (z.B. ArUco Marker entsprechenden Erkennungsalgorithmen, da diese auf eine schnelle Positionserkennung auf bewegten Objekten ausgelegt sind). Beispielsweise kann das Kennungsmerkmal einen Barcode oder einen anderen maschinenlesbaren Code aufweisen.

Mittels der Produkterfassungsvorrichtung 104 kann ein produktweises Ermitteln der einzelnen Produktkennungen erfolgen (auch als Kennungserfassen bezeichnet). Der Bereich, in dem die Produkterfassungsvorrichtung 104 das Produkt erfassen kann, kann beispielsweise eine Produkterfassungszone sein. Das Kennungserfassen kann aufweisen, dass ein zu erfassendes Produkt der Produkterfassungsvorrichtung 104 präsentiert wird. Das Präsentieren kann aufweisen, dass das zu erfassende Produkt in der Produkterfassungszone angeordnet wird und dessen Kennungsmerkmal in Richtung der Produkterfassungsvorrichtung 104 ausgerichtet wird.

Beispielsweise kann die Produkterfassungsvorrichtung 104 eine optische Erfassungsvorrichtung, eine RFID-Scanvorrichtung (Radiofrequenz-Identifikation) oder dergleichen aufweisen. Die optische Erfassungsvorrichtung kann beispielsweise eine Barcode-Scanvorrichtung oder eine Bildabtastvorrichtung aufweisen. Die Barcode-Scanvorrichtung kann entsprechende Sensoren zur Implementierung einer Scanfunktionalität beinhalten, wie beispielsweise einen oder mehr als einen Infrarotsensor, eine oder mehr als eine Kamera und dergleichen. Die Produkterfassungsvorrichtung 104 kann beispielsweise eingerichtet sein, den maschinenlesbaren Code zu erfassen und verarbeiten zu können, um daraus die Produktkennung zu extrahieren.

Die Produkterfassungsvorrichtung 104 und die Bilderfassungsvorrichtung 102 können eine entsprechende Infrastruktur (z.B. Prozessor, Speichermedium und/oder Bussystem aufweisend) oder dergleichen aufweisen, welche eine Messkette implementiert. Die Messkette kann eingerichtet sein, die entsprechenden Sensoren (z.B. Kamera, Scanner, usw.) anzusteuern, deren Messgröße als Eingangsgröße zu verarbeiten und darauf basierend die Bilddaten bzw. Produktkennung als Ausgangsgröße bereitzustellen.

Die Produkterfassungsvorrichtung 104, die Bilderfassungsvorrichtung 102 und die Steuervorrichtung 106 müssen aber nicht notwendigerweise dedizierte Infrastrukturen aufweisen. Beispielsweise können deren informationsverarbeitende Funktionen auch als Komponenten derselben Software (auch als Anwendung bezeichnet) bereitgestellt werden, die von einem oder mehr als einem Prozessor des Registrierterminals 200 ausgeführt wird. Es können selbstverständlich auch mehrere Anwendungen und/oder mehrere Prozessoren (z.B. ein Verbund dieser) verwendet werden, welche die informationsverarbeitenden Funktionen der Produkterfassungsvorrichtung 104, der Bilderfassungsvorrichtung 102 und der Steuervorrichtung 106 bereitstellen.

Die Steuervorrichtung 106 kann eingerichtet sein, das Verfahren 100 zu implementieren, wie im Folgenden exemplarisch beschrieben wird.

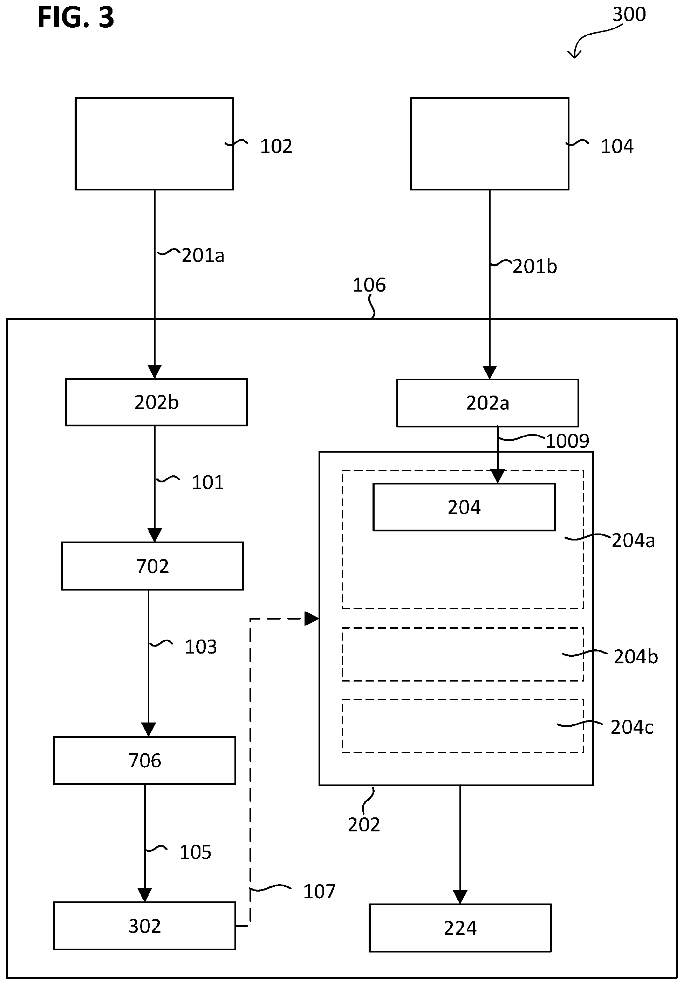

**Fig.3** veranschaulicht ein Registrierterminal 200 gemäß verschiedenen Ausführungsformen 300 in einem schematischen Kommunikationsdiagramm.

Die Bilderfassungsvorrichtung 102 kann eingerichtet sein, der Steuervorrichtung 106 die Bilddaten 202b und/oder Tiefeninformationen des Erfassungsbereichs zuzuführen 201a (z.B. im Rohdatenformat oder einer vorbearbeiteten Version des Rohdatenformats), z.B. kontinuierlich als Sequenz. Die Produkterfassungsvorrichtung 104 kann eingerichtet sein, der Steuervorrichtung 106 eine erfasste Produktkennung 202a zuzuführen 201b.

Die Steuervorrichtung 106 kann eingerichtet sein zum Ermitteln 1009 von Zahlungsinformationen 204 basierend auf der Produktkennung 202a (auch als Zahlungsinformation-Ermitteln bezeichnet). Die Zahlungsinformationen 204 können anschaulich repräsentieren, welcher Preis für das entsprechende Produkt mit der Produktkennung 202a aufgerufen wird. Beispielsweise kann dazu die erfasste Produktkennung 202a mit einer Datenbank abgeglichen werden.

Beispielsweise kann die Steuervorrichtung 106 eingerichtet sein, eine Registriersitzung 202 zu starten, z.B. in Antwort auf ein ermitteltes Ereignis (auch als Sitzungsstartereignis bezeichnet), welches repräsentiert, dass eine Selbstbedienungsregistrierung erfolgen soll. Beispiele für das Sitzungsstartereignis können aufweisen, dass ein Nutzer vor dem Registrierterminal 200 steht und/oder eine entsprechende Eingabe an diesem vornimmt, dass der Produkterfassungsvorrichtung 104 ein Produkt präsentiert wurde, und/oder dass eine vorherige Registriersitzung beendet wurde.

In ähnlicher Weise kann die Steuervorrichtung 106 eingerichtet sein, die Registriersitzung 202 zu beenden, z.B. in Antwort auf ein ermitteltes Ereignis (auch als Sitzungsendereignis bezeichnet), welches repräsentiert, dass eine Abrechnung der Selbstbedienungsregistrierung erfolgen soll. Beispiele für das Sitzungsendereignis können aufweisen, dass ein Nutzer eine entsprechende Eingabe an dem Registrierterminal 200 vornimmt, dass eine Bankkarte oder ein anderes Zahlungsmittel von dem Registrierterminal 200 erfasst wurde, und/oder dass ein vordefinierter Zeitraum abgelaufen ist, seit dem das letzte Produkt erfasst wurde.

Zum Beenden der Registriersitzung 202 kann die Steuervorrichtung 106 eingerichtet sein, eine Abrechnungsinformation 224 zu ermitteln und mittels einer Anzeigevorrichtung des Registrierterminals 200 anzuzeigen. Die während einer Registriersitzung 202 ermittelten

Zahlungsinformationen 204 können beispielsweise aggregiert werden und das Ergebnis des Aggregierens der Abrechnungsinformation 224 hinzugefügt werden. Die Abrechnungsinformation 224 kann anschaulich angeben, welche zu zahlende Summe die registrierten Produkte ergeben. Die Abrechnungsinformation 224 kann optional weitere Informationen aufweisen, wie beispielsweise der Anteil an Steuern, eine Liste der erfassten Produkte, eine Einzelaufstellung der erfassten Produkte, oder Ähnliches.

Zum Beenden der Registriersitzung 202 kann ferner ein Bezahlprozess initiiert werden, mittels dessen die zu zahlende Summe gemäß der Abrechnungsinformation 224 beglichen werden kann. Das Begleichen kann beispielsweise mittels des Zahlungsmittel-Terminals (nicht dargestellt) erfolgen.

Die Steuervorrichtung 106 kann eingerichtet sein, basierend auf den Bilddaten 202b das Verfahren 100 durchzuführen. Dazu kann die Steuervorrichtung ein oder mehr als ein Segment 702 (auch als Datensegment bezeichnet) der Bilddaten 202b ermitteln 101 und das Klassifizieren 103 der Bilddaten ohne das eine oder mehr als eine ermittelte Datensegment durchführen. Mittels des Klassifizierens 103 kann die Klasse 706 der Bilddaten ermittelt werden. Die Steuervorrichtung 106 kann ferner eingerichtet sein, das Signal 302 auszugeben 105.

Die Klasse 706 der Bilddaten kann beispielsweise die erste Klasse (auch als leer-Klasse oder als Klasse "leer" bezeichnet) oder die zweite Klasse (auch als nicht-leer-Klasse oder als Klasse "nicht-leer" bezeichnet) sein. War kein Transportbehälter in dem Erfassungsbereich angeordnet, kann die Klasse eine dritte Klasse (auch als nichts-Klasse oder als Klasse "nichts" bezeichnet) sein, die repräsentiert, dass die Bilddaten keinen Transportbehälter repräsentieren bzw. kein Transportbehälter in dem Erfassungsbereich anwesend war.

Das Verfahren 100 kann selbstverständlich auch stichprobenartig durchgeführt werden, z.B. nur für einen Teil der Registriersitzungen 202.

Das Signal 302 kann beispielsweise eingerichtet sein, in die Registriersitzung 202 (oder einen anderen Prozess des Registrierterminals 200) einzugreifen 107 und/oder eine oder mehr als eine Komponente des Registrierterminals 200 anzusteuern, z.B. um eine wahrnehmbare Information auszugeben, die das Ergebnis des Klassifizierens 103 repräsentieren und/oder auffordern das Ergebnis des Klassifizierens 103 zu quittieren.

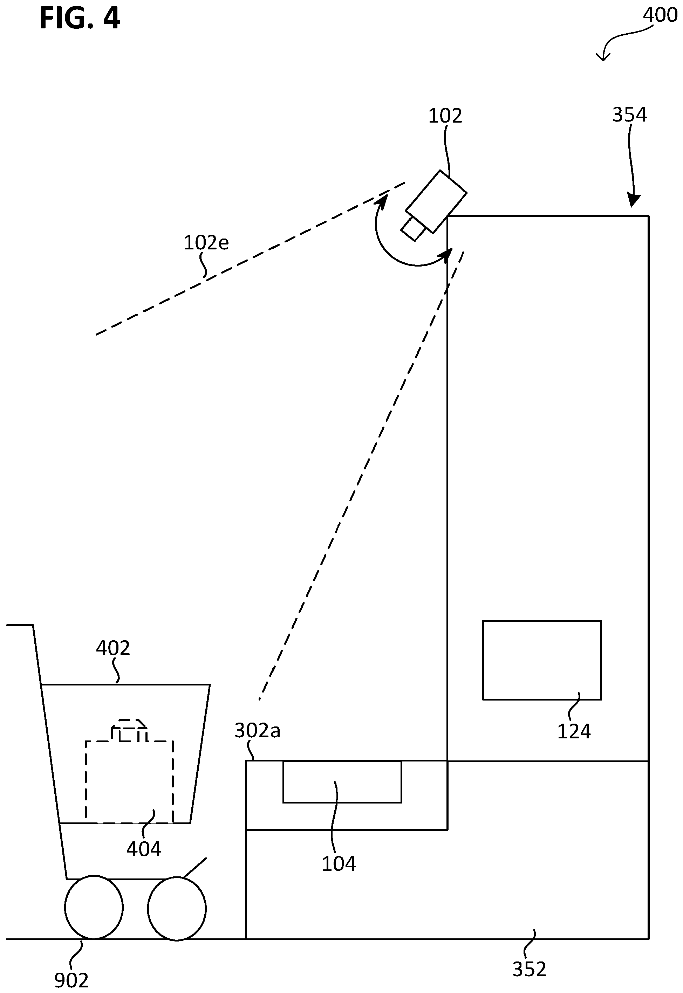

**Fig.4** veranschaulicht ein Registrierterminal 200 gemäß verschiedenen Ausführungsformen 400 in einer schematischen Seitenansicht.

Im Allgemeinen kann das Registrierterminal 200 ein Tragwerk 352 aufweisen, mittels dessen verschiedene Komponenten des Registrierterminals 200 getragen werden, beispielsweise eine Ablagevorrichtung 302a, die Bilderfassungsvorrichtung 102, die Produkterfassungsvorrichtung 104, die Steuervorrichtung (nicht dargestellt), usw.. Das Tragwerk 352 kann beispielsweise ein Gestell und ein daran befestigtes Gehäuse aufweisen, wobei das Gehäuse die sensiblen Komponenten des Registrierterminals 200 einhaust. Das Tragwerk 352 kann beispielsweise eine Basis aufweisen, mit welcher das Tragwerk 352 auf einem Untergrund 902 steht und einen vertikal erstreckten Abschnitt 354 (anschaulich auch als Säule oder "PoleMount" bezeichnet), welcher die erhöht angebrachten Komponenten, z.B. die Bilderfassungsvorrichtung 102 trägt. Der Untergrund 902 kann als Referenzebene 902 für die Tiefeninformationen verwendet werden, beispielsweise die Tiefe null repräsentierend, von dem aus gesehen Positionen oberhalb des Untergrunds 902 negative Tiefenwerte aufweisen.

Die Ablagevorrichtung 302a kann beispielsweise ein oder mehr als ein Transportband und/oder die Produkterfassungsvorrichtung 104 (z.B. einen Scanner) aufweisen. Allgemeiner kann die Ablagevorrichtung 302a einen oder mehr als eine Ablageebene (z.B. einen Kassentisch) bereitstellen, auf welcher die Produkte abgelegt und/oder über diese hinweg bewegt werden können.

Die Bilderfassungsvorrichtung 102 kann eingerichtet sein, Bilddaten des Erfassungsbereichs 102e zu erfassen. Dazu kann die Bilderfassungsvorrichtung 102 eine oder mehr als eine Kamera aufweisen. Beispielsweise kann die Bilderfassungsvorrichtung 102 eingerichtet sein, Bilddaten zu erzeugen, die Tiefeninformationen des Erfassungsbereichs 102e aufweisen.

Zum Ermitteln der Tiefeninformationen kann die Bilderfassungsvorrichtung 102 beispielsweise eine oder mehr als eine 3D-Kamera aufweisen (auch als 3-Dimension-Kamera bezeichnet). Eine 3D-Kamera kann im Allgemeinen eingerichtet sein, Bilddaten zu erfassen, welche die Tiefeninformationen aufweisen (und diesen damit zugeordnet sind), oder die Tiefeninformationen separat von den Bilddaten aber zugeordnet zu diesen bereitzustellen. Die Zuordnung kann derart eingerichtet sein, dass jedem Tiefenwert der Tiefeninformationen ein Segment (z.B. Pixel) der Bildinformationen zugeordnet ist.

Beispiele für eine 3D-Kamera weisen auf: eine plenoptische Kamera (auch als Lichtfeldkamera bezeichnet), eine stereoskopische Kamera (kurz auch als Stereokamera bezeichnet), eine Kamera mit Triangulationssystem, eine TOF-Kamera (Laufzeit-Kamera), eine Kamera mit Interferenzsystem. Eine Stereokamera ist hierbei eine besonders kostengünstige 3D-Kamera, welche leichter zu implementieren ist. Ebenso ist eine Stereokamera robuster gegenüber reflektierenden Oberflächen und benötigt keinen Laser, was das Gesundheitsrisiko für Personen im öffentlichen Raum reduziert. Eine sogenannte passive Stereokamera benötigt somit nicht notwendigerweise einen Laser. Demgegenüber kann eine sogenannte aktive Stereokamera (z.B. Intel RealSense D415) einen Infrarotlaser-Projektor zur Ausstrahlung eines Punktmusters aufweisen (eine sogenannte IR-aktiv-Stereokamera). Allgemeiner gesprochen kann die aktive Stereokamera eingerichtet sein, strukturiertes Licht zu emittieren, dass nicht notwendigerweise punktförmig und/oder IR-Licht sein muss.

Die TOF-Kamera kann beispielsweise eingerichtet sein, den Erfassungsbereich 102e mittels eines Lichtpulses auszuleuchten und für jeden Bildpunkt eine Zeit (die sogenannte Laufzeit) zu erfassen, welche der Lichtpuls wieder zurück braucht. Im Allgemeinen kann allerdings auch ein Signal anderen Typs (z.B. Schall) verwendet werden, um eine räumliche Verteilung der Laufzeit des Signals zu messen (z.B. ein Ultraschall-Laufzeitverfahren). Dies ermöglicht es, eine noch einfacher aufgebaute Kamera zu verwenden oder im Vergleich zu einem Lichtpuls eine größere Bildauflösung bereitzustellen.

Es kann alternativ oder zusätzlich auch ein anderer Mechanismus verwendet werden, um die Tiefeninformationen bereitzustellen. Beispielsweise kann die Bilderfassungsvorrichtung 102 eingerichtet sein, einen variablen Fokus (Autofokus) zum Ermitteln der Tiefeninformationen zu verwenden. Der Fokus kann beispielsweise auf den Boden des Transportbehälters gerichtet werden, so dass anhand der Fokusposition der Abstand zwischen der Bilderfassungsvorrichtung 102 und dem Boden des Transportbehälters als Tiefeninformation ermittelt werden kann. Alternativ oder zusätzlich kann das Ermitteln der Tiefeninformationen auf Grundlage einer Kantenkontrastmessung und/oder eines Phasenvergleichs erfolgen.

Die oder jede Ablagevorrichtung 302a kann derart eingerichtet sein, dass auf dieser ein oder mehr als ein Produkt abgelegt werden kann. Dazu kann eine Ablagevorrichtung 302a beispielsweise ein Ablageregal, einen Ablagehaken für Taschen und/oder einen Ablagetisch aufweisen. Optional kann die oder jede Ablagevorrichtung 302a eine Waage aufweisen, welche eingerichtet ist, ein Gewicht der auf der Ablagevorrichtung abgelegten Produkte zu erfassen. Beispielsweise kann die Ablagevorrichtung 302a drei Zonen des Produktumschlags aufweisen: ein Ablageort für noch nicht erfasste (z.B. gescannte) Produkte, die Produkterfassungszone (z.B. Scanzone), d.h. der Teilbereich während des Scannens, und ein Ablageort für gescannte Produkte.

Optional kann das Registrierterminal 200 eine Informationsausgabevorrichtung 124 aufweisen, wie später noch genauer beschrieben wird. Die Informationsausgabevorrichtung 124 kann beispielsweise eingerichtet sein, eine vom Menschen wahrnehmbare (z.B. hörbare oder sichtbare) Information auszugeben, z.B. mittels einer Anzeigevorrichtung der Informationsausgabevorrichtung 124. Die Information kann beispielsweise eine Aufforderung und/oder eine Hilfestellung für den Benutzer aufweisen. Das Ausgeben der Information und/oder der Inhalt der Information können beispielsweise mittels des Signals 302 instruiert werden.

Während einer Registriersitzung 202 kann ein Transportbehälter 402 in dem Erfassungsbereich angeordnet sein oder durch diesen hindurch bewegt werden, z.B. auf dem Untergrund 902 stehend. Der Transportbehälter 402 kann leer sein kann oder es kann ein oder mehr als ein Produkt 404 in dem Transportbehälter 402 angeordnet sein, so dass dieser nicht-leer ist. Dieser Unterschied, d.h. ob der Transportbehälter 402 leer ist oder nicht, kann mittels des leer-Erkennens ermittelt werden.

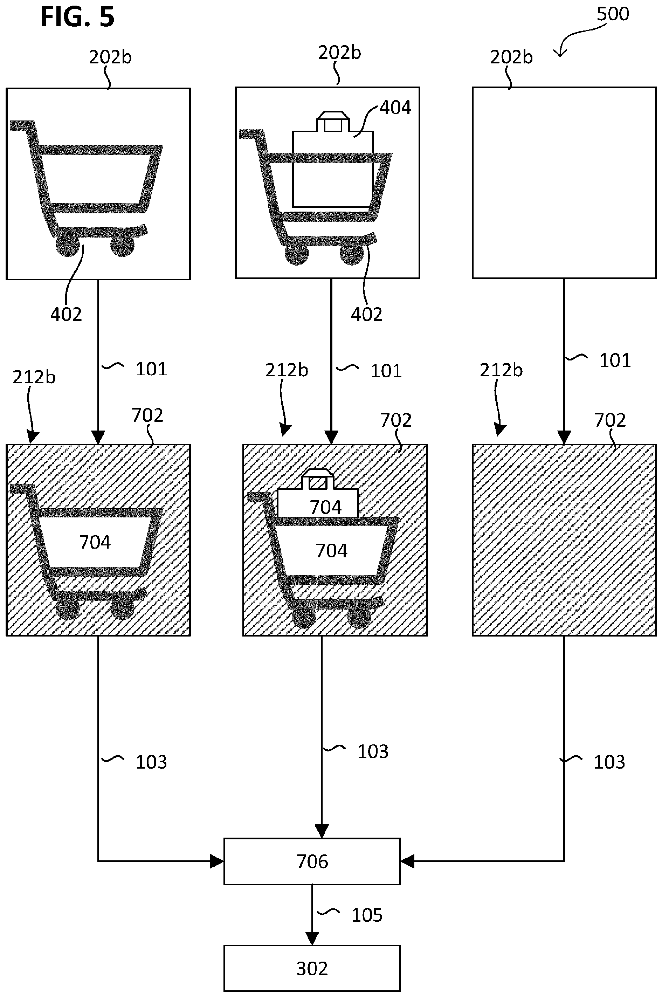

**Fig.5** veranschaulicht das Verfahren 100 gemäß verschiedenen Ausführungsformen in einem schematischen Ablaufdiagramm 500, z.B. mittels der Steuervorrichtung 106 implementiert.

In 101 kann ein oder mehr als ein Datensegment aus den Bilddaten 202b herausgefiltert werden, welche den unbeweglichen (invarianten) Hintergrund des Erfassungsbereichs 102e repräsentieren (auch als Tiefensegmentieren oder anschaulicher als Freistellen bezeichnet) und beim Klassifizieren 103 nicht berücksichtigt werden soll. Allgemeiner gesprochen, kann das Tiefensegmentieren 101 unter Verwendung der Tiefeninformationen erfolgen.

Die Tiefeninformationen geben pixelweise eine Tiefe an, z.B. einen Abstand von der Bilderfassungsvorrichtung 102 oder einem anderen Referenzobjekt 902 (z.B. der Referenzebene 902). Beispielsweise können diejenigen Datensegmente, welche eine anschaulich große Tiefe aufweisen, herausgefiltert 101 werden. Alternativ oder zusätzlich können diejenigen Datenbestandteile, welche anschaulich eine geringe Tiefe aufweisen, von dem Herausfiltern 101 geschützt werden. Das Tiefensegmentieren ist unempfindlicher gegenüber der vorherrschenden Lichtsituation, gegenüber Reflexionen, oder anderen Störungen in dem Erfassungsbereich 102e. Allgemeiner gesprochen kann das Tiefensegmentieren aufweisen, die Tiefeninformationen und die Farbinformationen der Bilddaten einander zu überlagern, so dass diejenigen Datenbestandteile, welche eine große Tiefe aufweisen, herausgefiltert 101 werden.

Zum Tiefensegmentieren kann beispielsweise eine Filtermaske (vereinfacht auch als Maske bezeichnet) verwendet werden. Eine Filtermaske kann beispielsweise einen Grafikfilter aufweisen und eine Segmentierungsmaske. Die Segmentierungsmaske kann anschaulich (z.B. pixelweise) angeben, z.B. mittels eines Helligkeitswerts, auf welche Datensegmente (z.B. Pixel) der Bilddaten 202b der Grafikfilter angewendet werden soll bzw. welche Datensegmente vor einer Anwendung des Grafikfilters geschützt werden soll. Beispielsweise können helle Bereiche der Segmentierungsmaske angeben, dass die Anwendung des Grafikfilters erfolgen soll und dunkle Bereiche angeben, dass keine Anwendung des Grafikfilters erfolgen soll, oder andersherum. Es können selbstverständlich auch Abstufungen zwischen hell und dunkel verwendet werden, um eine teilweise Anwendung des Grafikfilters und/oder einen Übergang zu erreichen. Die Anwendung des Grafikfilters kann beispielsweise aufweisen, die Farbinformation der Bilddaten zu verändern, z.B. abzudunkeln (z.B. mittels eines Schwarzfilters), zu ersetzen (z.B. mittels einer Ersetzenfilters) oder zu entfernen (z.B. mittels eines Entfernenfilters). Die Maske kann dieselben pixelbezogenen Abmessungen (auch als Pixelmaß bezeichnet) aufweisen, wie die Farbinformationen (z.B. Infrarotinformationen).

Die Segmentierungsmaske kann beispielsweise als Zwischenschritt auf einen entsprechenden Grafikfilter angewendet werden, so dass ein selektives Anwenden des Grafikfilters auf die Bilddaten 202b erreicht wird. Als Resultat des Tiefensegmentieren 101 werden gefilterte Bilddaten 212b (auch als zusätzliche Bilddaten 212b bezeichnet) erhalten, welche die gemäß den Tiefeninformationen freigestellten beweglichen Objekte 402, 404 in dem Erfassungsbereich 102e repräsentieren, z.B. ohne deren Hintergrund. Das Tiefensegmentieren 701 kann beispielsweise aufweisen, ein oder mehr als ein Bilddatensegment 702 (kurz auch als Segment oder Datensegment bezeichnet) der Bilddaten, welches den Hintergrund des Erfassungsbereichs 102e repräsentiert, zu maskieren und/oder zu verwerfen (z.B. nicht beim Klassifizieren weiterzuverwenden).

Das Tiefensegmentieren 101 kann beispielsweise aufweisen, die Tiefeninformationen auf die Maske abzubilden, gemäß welcher die Bilddaten maskiert bzw. segmentiert werden. Das Abbilden kann beispielsweise mittels einer Funktion erfolgen, welche nicht notwendigerweise stetig sein muss. Eine unstetige Funktion kann beispielsweise einen scharfen Übergang zwischen dem Anwenden des Grafikfilters und dem Schützen vor dessen Anwendung bereitstellen.

In 500 kann das Tiefensegmentieren 101 beispielsweise mittels Bearbeitens der Bilddaten 202b erfolgen. Alternativ oder zusätzlich dazu kann das Tiefensegmentieren 101 allerdings auch fokal erfolgen, z.B. indem eine geringe Schärfentiefe bzw. große Tiefenunschärfe beim Erfassen der Bilddaten verwendet wird. Dies erreicht, dass der Hintergrund des Erfassungsbereichs 102e unscharf abgebildet wird, wenn auf das Objekt 404, 402 fokussiert wird. In diesem Fall können die Bilddaten 202b bereits das eine oder mehr als das eine freigestellte Objekt aufweisen. Zum fokalen Tiefensegmentieren kann eine Bilderfassungsvorrichtung verwendet werden, welche eine geringe Schärfentiefe bereitstellt (z.B. von wenigen Zentimetern). Eine geringe Schärfentiefe kann beispielsweise mit einem großen Bildsensor (z.B. mehr als 2,5 cm) und/oder einer geringen Blendenzahl (z.B. kleiner als 2,0) bereitgestellt werden. Allgemeiner gesprochen kann die hyperfokale Entfernung der Bilderfassungsvorrichtung 102 größer sein als der Abstand dieser zum Objekt oder zur Referenzebene. Beispielsweise kann der Bildsensor eine diagonale Ausdehnung aufweisen, die größer ist als die Schärfentiefe. Im Folgenden wird sich auf die bearbeiteten 212b Bilddaten bezogen. Das Beschriebene kann in Analogie für optisch freigestellte Bilddaten gelten.

Gemäß verschiedenen Ausführungsformen können die Tiefeninformation zum Tiefensegmentieren der beweglichen oberhalb der Referenzebene 902 angeordneten Objekte verwendet werden. Die Tiefeninformation kann wiederum durch eine stereoskopische Kamera ermittelt werden. Diese bestimmt die Entfernung (anschaulich Tiefe) bestimmter Bildbereiche über die Disparität der verschiedenen Perspektiven der stereoskopischen Kamera. Die Schärfentiefe der stereoskopischen Kamera kann, muss aber nicht notwendigerweise verwendet werden.

Im Zusammenhang mit einer Stereokamera bzw. dem Ermitteln von Tiefeninformationen bezeichnet die Disparität (auch als Deviation bezeichnet) einen Versatz in der Position, den das gleiche Objekt in der Abbildung aus zwei unterschiedlichen Perspektiven einnimmt. Die den Perspektiven zugehörigen Brennpunkte der beiden Objektive weisen einen Abstand b zueinander auf. Haben beide Objektive die Brennweite f gilt für den Abstand r des Objekts von den Objektiven (auch als Tiefe bezeichnet) r = b · f/d, wobei d die Disparität bezeichnet. Damit kann die Tiefeninformation r eines Objekts auf Grundlage einer ermittelten Disparität des Objekts im Stereobild ermittelt werden. Eine Disparitätenkarte eines Stereobildes ist somit gleichbedeutend zu einem Tiefenbild, das die räumliche Verteilung der Tiefeninformation angibt. Die Disparitätenkarte kann beispielsweise mittels einer Census-Transformation ermittelt werden.

Im Allgemeinen kann das Tiefensegmentieren ganz oder teilweise erfolgen. Das Tiefensegmentieren kann zur Folge haben, dass der Kontrast und/oder die Abbildungsschärfe derjenigen Datenbestandteile der Bilddaten, welche den Hintergrund repräsentieren, verringert werden.

Für das Tiefensegmentieren werden die Bilddaten 202b in Datensegmente unterteilt (auch als Segmentieren bezeichnet) mit einem abgespeicherten Schwellenwert als Kriterium für das Unterteilen. Ein oder mehr als ein erstes Datensegment 702 (schraffiert dargestellt) wird ermittelt, dessen Tiefenwert jeweils größer als der Schwellenwert ist (d.h. anschaulich den Hintergrund des Erfassungsbereichs 102e repräsentiert), d.h. das Kriterium erfüllt ist. Beispielsweise kann das erste Datensegment 702 die Umgebung repräsentieren. Ferner kann ein zweites Datensegment 704 (auch als Objektdatensegment bezeichnet) ermittelt werden, dessen Tiefenwert jeweils kleiner als der Schwellenwert ist. Beispielsweise kann das zweite Datensegment 704 ein oder mehr als ein bewegliches Objekt (z.B. den Transportbehälter 402 und/oder das Produkt 404 darin) in dem Erfassungsbereich 102e repräsentieren. Das erste Datensegment 702 (auch als Umgebungsdatensegment bezeichnet) kann herausgefiltert werden, indem dieses beispielsweise entfernt, geschwärzt oder markiert wird.

Zusätzlich zu dem Tiefensegmentieren kann das Tiefensegmentieren optional unter Verwendung der Bilddaten des leeren Erfassungsbereichs erfolgen (auch als Vergleichsfiltern bezeichnet). Beispielsweise können diejenigen Datenbestandteile herausgefiltert werden, welche mit den Bilddaten des leeren Erfassungsbereichs übereinstimmen.

Zusätzlich zu dem Tiefensegmentieren und/oder dem Vergleichsfiltern kann das Tiefensegmentieren optional unter Verwendung der Farbinformationen der Bilddaten erfolgen (auch als Farbfiltern bezeichnet), beispielsweise der RGB-Informationen (Rot-Gelb-Blau-Informationen). Beispielsweise können diejenigen Datenbestandteile herausgefiltert werden, welche eine bestimmte Farbe aufweisen (zum Beispiel die Farbe des Hintergrunds). Das Farbfiltern kann beispielsweise farbkanalweise erfolgen, z.B. einzeln für den rot-Kanal, den blau-Kanal und den grün-Kanal. Es kann selbst verständlich auch ein anderer Farbraum als RGB verwendet werden.

Das Vergleichsfiltern und/oder das Farbfiltern können allerdings anfällig sein gegenüber der aktuellen Lichtsituation und/oder Reflexionen und daher beispielsweise nur unterstützend zu dem Tiefensegmentieren verwendet werden. Alternativ oder zusätzlich kann es im Gegensatz zu dem Fall des Tiefensegmentierens erforderlich sein, das Vergleichsfilter regelmäßig an die Situation anzupassen und/oder kann das Farbfiltern zumindest einmalig pro "Standort" anzupassen.

Vorzugsweise kann nur das Tiefensegmentieren (optional zusammen mit dem Farbfiltern) erfolgen. Es kann auch eine andere Kombination mehrerer Typen des Herausfilterns 701 erfolgen, z.B. des Tiefensegmentierens zusammen mit dem Farbfiltern und/oder dem Vergleichsfiltern. Im Allgemeinen ermöglicht eine Kombination verschiedener Typen des Herausfilterns 101, mehr Information und/oder eine geringere Empfindlichkeit gegenüber Störungen zu erhalten.

Als Ergebnis des Tiefensegmentierens 101 können diejenigen Datenbestandteile als beim Klassifizieren 103 zu berücksichtigend übrig bleiben, welche ein bewegliches Objekt 402, 404 in dem Erfassungsbereich 102e repräsentieren, das sich von dem unbeweglichen (invarianten) Hintergrund des Erfassungsbereichs 102e unterscheidet. Dies ermöglicht es, die dem Klassifizieren 103 zugeführte Datenmenge zu optimieren und Fehlerquellen zu reduzieren.

In 103 können die gefilterten Bilddaten 212b klassifiziert 103 werden (auch als Klassifizieren 103, genauer als Klassieren bezeichnet), d.h. einer Klasse 706 aus mehreren Klassen (auch als Bildklasse bezeichnet) zugeordnet werden. Das Klassifizieren kann auf Grundlage der gefilterten Bilddaten 212b erfolgen, z.B. mittels eines Klassifikators oder Ähnlichem, welcher auf die gefilterten Bilddaten 212b angewendet wird. Je nachdem ob ein leerer oder nicht-leerer Transportbehälter anhand der gefilterten Bilddaten 212b erkannt wird, kann die entsprechende Klasse 706 zugeordnet werden.

Die mehreren Bildklassen können beispielsweise eine leer-Klasse (auch als Klasse "leer" bezeichnet) aufweisen, welche angibt, dass kein bewegliches Objekt 404 in dem Transportbehälter 402 anhand der gefilterten Bilddaten 212b erkannt wurde (d.h. der Transportbehälter 402 leer war). Die mehreren Bildklassen können eine nicht-leer Klasse (auch als Klasse "nicht-leer" bezeichnet) aufweisen, welche angibt, dass ein oder mehr als ein bewegliches Objekt 404 in dem Transportbehälter 402 erkannt wurde. Die mehreren Bildklassen können optional eine dritte Klasse (auch als Klasse "nichts" bezeichnet), welche repräsentiert, dass der Erkennungsbereich leer ist bzw. dass kein Transportbehälter 402 erkannt wurde.

Das Klassifizieren 103 kann gemäß verschiedenen Ausführungsformen mittels eines antrainierten Verarbeitungsalgorithmus (auch als Klassifizierungsalgorithmus oder vereinfacht Klassifikator bezeichnet) erfolgen. Ein hierin beschriebener Klassifikator kann beispielsweise mittels eines künstlichen Neuronalen Netzes (kNN) bereitgestellt sein, wie hierin genauer beschrieben wird. Der Klassifikator kann optional zusätzlich zu dem kNN auch mittels einer Objekterkennung, einer Kantenerkennung, einer Transformation, einer Größenerkennung und/oder einer Farberkennung implementiert sein.

Beispiele für die Trainingsdaten zum Trainieren des Klassifizierungsalgorithmus können aufweisen: Bilddaten des leeren Erkennungsbereichs, Bilddaten des Erkennungsbereichs mit leerem Transportbehälter, Bilddaten des Erkennungsbereichs mit nicht-leerem Transportbehälter. Beispiele für Zielgröße zum Trainieren des Klassifizierungsalgorithmus können die mehreren Bildklassen aufweisen.

Alternative oder zusätzliche mögliche Beispiele für Trainingsdaten (auch als Eingangsvektoren bezeichnet) können die Tiefeninformation aufweisen, so dass diese anschaulich nicht zwangsläufig nur zum Tiefensegmentieren verwendet werden muss. In Ähnlicher Weise können die Tiefeninformation optional auch beim Klassifizieren 103 berücksichtigt werden.

Alternativ oder zusätzlich mögliche Beispiele für Zielgrößen können aufweisen, dass die Klasse "nicht-leer" weiter unterteilt wird, um das Erscheinungsbild der Artikel mit einen oder mehr als einem Referenzerscheinungsbild zu vergleichen. Beispielsweise kann bereits beim Klassifizieren ermittelt werden, wie viel in dem nicht-leeren Transportbehälter 402 angeordnet ist. Als Maß dafür kann beispielsweise eine als nicht-leer belegte Fläche des Transportbehälters oder eine diese repräsentierende Größe verwendet werden.

Beispielsweise kann eine Unterteilung der Klasse "nicht-leer" bereitgestellt sein oder werden, beispielsweise in eine Unterklasse "nicht-leer aber unbedenklich" und eine Unterklasse "nicht-leer und bedenklich". Die Unterklasse "nicht-leer aber unbedenklich" kann beispielsweise ermittelt werden, wenn das Erscheinungsbild des oder jedes Objekts im Transportbehälter keinem Artikel zugeordnet werden kann, welcher (z.B. dessen Muster und/oder Produktkennung) in der Datenbank hinterlegt ist. Beispiele für ein solches Objekte weisen auf: Geldbörse, Kassenbon, Einkaufstasche. Dies ermöglicht es, eine Verringerung von "Fehlalarmen" zu erreichen. Die Unterklasse "nicht-leer aber unbedenklich" kann optional abgebildet werden auf die Klasse "leer", so dass beispielsweise kein Signals oder das Signal der Klasse "leer" ausgegeben wird.

Beispiele für den Verarbeitungsalgorithmus können verschiedene Formen des maschinellen Lernens zur Bildklassifikation aufweisen, wie beispielsweise
- das sogenannte "Histogram of oriented gradients" (HOG) in Kombination mit einer Stützvektormaschine (SVM);
- ein vortrainiertes kNN mit "Standard-Architektur" (z.B. GoogLeNet), das ferner per "Transferlernen" und Feinanpassung auf das gegebene Problem angepasst wird.

Letzteres bringt allerdings für das gegebene Problem höhere Hardware-Anforderungen und/oder höhere Fehlerraten mit sich, da die Vortrainingsdatenbank sehr verschieden ist zu den hier betrachteten Eingangsvektoren.

Werden dem Klassifizierungsalgorithmus die gefilterten (und damit reduzierten) Bilddaten 212b zugeführt, kann ein weniger komplexer Algorithmus und/oder ein weniger leistungsfähiger Prozessor verwendet werden, der den Klassifizierungsalgorithmus ausführt. Anschaulich weisen die gefilterten Bilddaten 212b im Wesentlichen nur noch diejenigen Datenteile auf, die von dem Hintergrund disjunkte Objekte repräsentieren, oder sind leer. Damit wird die zu verarbeitende Datenmenge optimiert und die Klassen sind stärker voneinander separiert.

In 105 kann das Signal 302 auf Grundlage eines Ergebnisses 706 des Klassifizierens 103 ausgegeben werden.

In einer wenig komplexen Implementierung kann der Klassifizierungsalgorithmus beispielsweise nur eine Unterscheidung zwischen einem leeren Transportbehälter und den nicht-leeren Transportbehälter bereitstellen. Die Klasse "nichts" kann beispielsweise automatisch ermittelt werden, wenn die gefilterten Bilddaten 212b zu mehr als 99% gefiltert (z.B. geschwärzt) sind. Die Klasse "nichts" kann beispielsweise automatisch ermittelt werden, wenn kein Transportbehälter in dem Erfassungsbereich 102e anwesend ist. Beispielsweise kann anhand der 2D-Bilddaten erkannt werden, ob ein Transportbehälter 402 in dem Erfassungsbereich 102e angeordnet ist (d.h. ob ein Transportbehälter 402 anwesend ist).

Beispielsweise kann das Erkennen der Anwesenheit des Transportbehälters 402 das Durchführen des Verfahrens 100 auslösen.

Beispielsweise kann das Erkennen der Anwesenheit des Transportbehälters 402 mittels Erfassens von Reflektionen (auf Objekten), z.B. im IR-Bereich, erfolgen. Es kann erkannt werden, ob die Reflexionen von einem Transportbehälter stammen, z.B. von dessen Struktur und/oder von Markern. Alternativ oder zusätzlich können Farbinformationen (der 2D-Bilddaten) und/oder die Tiefeninformationen verwendet werden, um zu erkennen, ob der Transportbehälter 402 anwesend ist. Es können aber auch andere Mechanismen verwendet werden, um die Anwesenheit des Transportbehälters zu erkennen, beispielsweise eine Waage in dem Untergrund 902, eine Lichtschranke, ein Bewegungsmelder, usw.

Gemäß verschiedenen Ausführungsformen kann eine Kombination aus einer oder mehr als einer 3D-Kamera und/oder einer oder mehr als einer RGB-Kamera als 2D-Kamera oberhalb des Kassentisches bereitgestellt sein. Ein Kalibrierungsalgorithmus kann den Verarbeitungsalgorithmus anhand der sichtbaren 3D-Geometrie des Erfassungsbereichs 102e vor dem Registrierterminal (wenn dieses leer ist) anlernen (auch als Trainieren bezeichnet) und nähert diese 3D-Geometrie durch Ebenen unterschiedlicher relativer Entfernung an. Anhand der so ermittelten Topologie des zu überwachenden Erfassungsbereichs 102e kann ein Objekt, das sich oberhalb der Referenzebene 902 befindet, effektiv vom Hintergrund freigestellt werden. Dieser Mechanismus ist effektiver als eine rein RGB-Bild-basierte Segmentierung oder Mustererkennung und ist nahezu unabhängig von Umwelteinflüssen wie Licht-, Schattenwurf und Reflektionen. Die resultierenden Bilddaten 212b können somit ebenfalls nahezu unabhängig von genannten Einflüssen bzw. des Standorts des Registrierterminals sein. Dies ermöglicht eine robuste Klassifikation der Bilddaten ohne aufwändiges Anlernen der Algorithmen für jeden individuellen Standort.

Die Kalibrierung auf die Referenzebene 902 und damit spätere Freistellung von Objekten kann unabhängig von der Klassifizierung der vorverarbeiteten Bilddaten erfolgen. Beispielsweise kann ein Klassifikator, der in einer bestimmten Geometrie nach der Freistellung angelernt wurde, auch ohne ein erneutes Anlernen in einer anderen (z.B. ähnlichen) Geometrie angewandt werden. Solange die Geometrie vergleichbar bleibt, d.h. in etwa gleiche Abstände zwischen den relevanten Objekten und der Kamera, kann der Algorithmus an dem einen Registrierterminal 200 (oder auch in einer nachgestellten Geometrie) angelernt und auf einem anderen Registrierterminal 200 eingesetzt werden. Die Kalibrierung auf die gegebene Referenzebene stellt sicher, dass die Bilddaten nicht nur unabhängig von der Umgebung, sondern auch nahezu unabhängig von der konkreten Geometrie des Registrierterminals 200 sind.

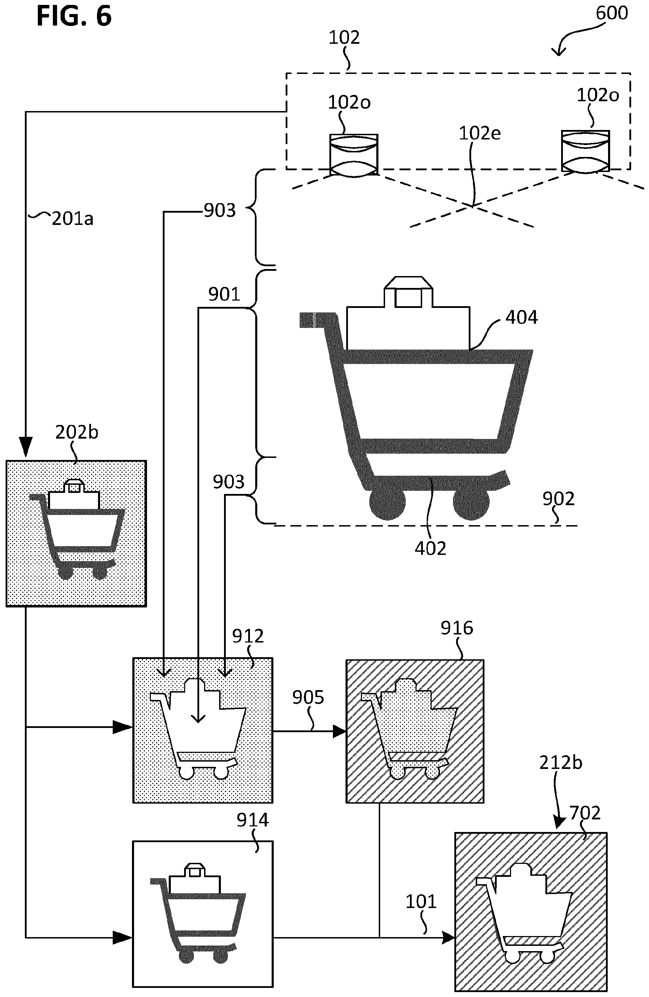

**Fig.6** veranschaulicht das Verfahren 100 gemäß verschiedenen Ausführungsformen in einem schematischen Ablaufdiagramm 600. Das Verfahren kann beispielsweise mittels der Steuervorrichtung 106 implementiert sein oder werden.

Die mittels der Bilderfassungsvorrichtung 102 erfassten Bilddaten 202b können Farbbilddaten 914 und Tiefenbilddaten 912 aufweisen. Die Farbbilddaten 914 können eine Pixelmatrix mit (monochromen oder polychromen) Farbinformationen aufweisen, wobei die Farbinformationen als Wert jedes Pixels dessen Farbwert angeben. Die Tiefenbilddaten 912 können eine Pixelmatrix mit Tiefeninformationen aufweisen, wobei die Tiefeninformationen als Wert jedes Pixels dessen Tiefenwert angeben.

Die Tiefenbilddaten 912 und die Farbbilddaten 914 können mittels derselben Kamera oder mittels separater (z.B. getrennt voneinander) Kameras erfasst werden. Beispielsweise kann eine 3D-Kamera die Tiefenbilddaten 912 ermitteln und eine RGB-Kamera kann die Farbbilddaten 914 ermitteln.

Die Tiefeninformationen können beispielsweise mittels einer Stereokamera als 3D-Kamera bereitgestellt sein oder werden. Eine Stereokamera kann mehrere (z.B. zwei) nebeneinander angeordnet Objektive 102o aufweisen, welche auf den Erfassungsbereich 102e gerichtet sind. Die mehreren Objektive 102o können eingerichtet sein, den Erfassungsbereich 102e auf einen oder mehr als einen Bilderfassungssensor der Bilderfassungsvorrichtung 102 abzubilden. Der Bilderfassungssensor kann beispielsweise infrarotsensitiv sein, d.h., Infrarotstrahlung erfassen.

Mittels der Stereokamera werden anschaulich Bilddaten erfasst, die mehrere Perspektiven des Erfassungsbereichs 102e zur selben Zeit repräsentieren (auch als stereoskopische Bilddaten bezeichnet), d.h. die den Erfassungsbereich 102e aus verschiedenen Richtungen und/oder von verschiedenen Orten aus betrachtet repräsentieren. Die Belichtungssteuerung und/oder die Schärfeneinstellung der Objektive können dazu beispielsweise miteinander gekoppelt sein.

Die Tiefeninformationen können auf Grundlage der stereoskopischen Bilddaten des Erfassungsbereichs 102e ermittelt werden. Beispielsweise können die verschiedenen Perspektiven der stereoskopischen Bilddaten einander überlagert und daraus die Tiefeninformationen abgeleitet werden. Das für die stereoskopische Bilderfassungsvorrichtung 102 Beschriebene kann in Analogie auch für eine anders eingerichtete Bilderfassungsvorrichtung 102 gelten, welche einen anderen Mechanismus implementiert, um die Tiefeninformationen bereitzustellen.

Im Allgemeinen können die Tiefeninformationen 912 eine Information aufweisen, welche mehrere Segmente der Bilddaten in eine räumliche Beziehung zueinander und/oder zu einem Referenzobjekt 902, 102 setzt. Dem entsprechenden Bilddatensegment kann jeweils ein Tiefenwert zugeordnet sein, welcher die räumliche Beziehung repräsentiert. Als Bilddatensegment können beispielsweise einzelne Pixel (d.h. die Tiefeninformation 912 kann pixelweise aufgelöst sein) oder mehrere Pixeln (die sogenannte Pixelgruppe) verwendet werden. Das Referenzobjekt 902, 102 kann beispielsweise die Bilderfassungsvorrichtung 102 und/oder die Referenzebene 902 aufweisen oder daraus gebildet sein. Beispielsweise können die Tiefeninformationen 912 pixelweise einen Abstand von dem Referenzobjekt 902, 102 als Tiefenwert angeben.

Die Tiefeninformationen 912 können auf die Farbinformationen abgebildet werden. Dazu können die Tiefeninformationen auf eine Filtermaske 916 abgebildet 905 werden. Die Filtermaske 916 kann beispielsweise entsprechend der Bilddaten 202b als Vektorgrafik oder Rastergrafik bereitgestellt sein. Deren Anwendung auf die Farbinformationen kann beispielsweise die Bilddatensegmente außerhalb der Interessenschicht 901 schwarz färben. Ob ein Bilddatensegmente innerhalb der Interessenschicht 901 liegt, und somit beim Klassifizieren berücksichtigt wird, oder außerhalb der Interessenschicht 901 liegt, und damit beim Klassifizieren nicht berücksichtigt wird, kann ermittelt werden, indem ermittelt wird, ob ein dem Segment zugeordneter Tiefenwert ein abgespeichertes Kriterium erfüllt.

Beispielsweise werden diejenigen Bilddatensegmente herausgefiltert 101 und somit beim Klassifizieren 103 nicht berücksichtigt, deren Tiefeninformationen ein vordefiniertes (z.B. abgespeichertes) Kriterium erfüllt. Das Kriterium kann anschaulich erfüllt sein, wenn die Tiefeninformationen einen geringen Abstand von dem Referenzobjekt 902, 102 repräsentiert, z.B. weniger als 20 Zentimeter, z.B. weniger als 10 Zentimeter. Als Ergebnis des Herausfilterns 101 können diejenigen Bilddatensegmente 704 übrig bleiben, welche ein Objekt 404, 402 innerhalb einer Schicht 901 (auch als Interessenschicht 901 bezeichnet) des Erfassungsbereichs 102e repräsentieren. Die Interessenschicht 901 kann räumlich von dem Referenzobjekt 902, 102 separiert sein, z.B. von einer nicht-Interessenschicht 903, die an das Referenzobjekt 902, 102 angrenzt.

Die Interessenschicht 901 kann beispielsweise derart angeordnet sein, dass ein oder mehr als ein Boden (z.B. Bodenwand und/oder Bodengitter) des Transportbehälters 402 und/oder ein Behälterinnenraum des Transportbehälters 402 in der Interessenschicht 901 angeordnet ist. Die Grenzen der Interessenschicht 901 können beispielsweise zum Bilden (z.B. Abgrenzen) des Kriteriums verwendet werden.

Das Kriterium kann beispielsweise erfüllt sein, wenn die Tiefeninformation (z.B. deren Wert) einen Abstand von dem Referenzobjekt 902 repräsentiert von weniger als ungefähr 20 Zentimeter (z.B. 10 Zentimeter) und/oder mehr als ungefähr 1,5 Meter (z.B. 2 Meter).

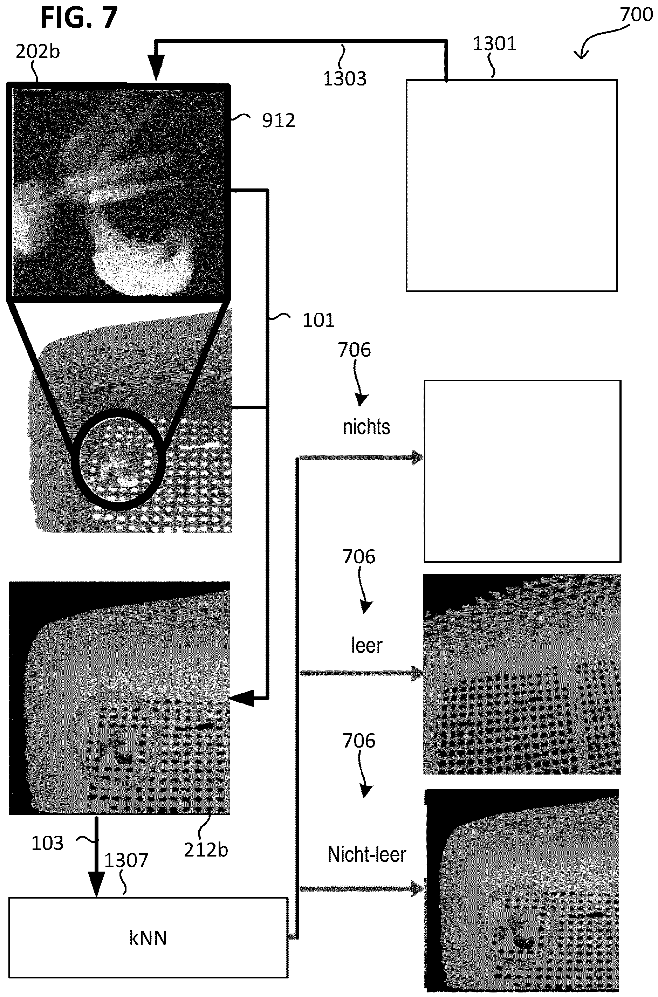

**Fig.7** veranschaulicht das Verfahren 100 gemäß verschiedenen Ausführungsformen in einem schematischen Ablaufdiagramm 700, beispielsweise mittels der Steuervorrichtung 106 implementiert.

Das Verfahren 100 kann in 1301 aufweisen, den oder jeden Verarbeitungsalgorithmus zu kalibrieren (auch als Kalibrieren bezeichnet). Mittels Kalibrierens kann beispielsweise das Kriterium gebildet oder aktualisiert werden.

Das Kalibrieren 1301 kann beispielsweise nur einmalig nötig sein, z.B. beim Systemstart und/oder nach Montage des Registrierterminals 200, und später weggelassen werden. Alternativ oder zusätzlich kann das Kalibrieren 1301 wiederholt werden, z.B. in Ruhephasen des Registrierterminals 200. Das Kalibrieren 1301 kann aufweisen, mittels der Bilderfassungsvorrichtung 102 erste Bilddaten des leeren Erfassungsbereichs 102e (z.B. dessen Referenzebene) zu erfassen. Die ersten Bilddaten können Tiefeninformationen und/oder Farbinformationen (z.B. beides gleichzeitig erfasst) aufweisen (auch als Referenz-Tiefeninformationen bzw. Referenz-Farbinformationen bezeichnet). Die Referenzebene 902 kann beispielsweise planar sein und daher keine oder nur wenig Topografie (auch als 3D-Stuktur bezeichnet) aufweisen. Die ersten Bilddaten des leeren Erfassungsbereichs 102e können abgespeichert und/oder als Trainingsdaten für den Verarbeitungsalgorithmus (z.B. den Objekterkennungsalgorithmus und/oder den Klassifizierungsalgorithmus) verwendet werden.

Das Kalibrieren 1301 kann mittels des Kalibrierungsalgorithmus erfolgen, der beispielsweise das Kriterium auf Grundlage der Referenz-Tiefeninformationen bzw. Referenz-Farbinformationen ermittelt bzw. aktualisiert. Das Kriterium kann beispielsweise einen Schwellenwert angeben, welcher größer ist als jeder Wert der Referenz-Tiefeninformationen, z.B. als eine Summe aus der Referenz-Tiefeninformationen und eines Toleranzwertes. Der Toleranzwert kann beispielsweise 20 Zentimeter oder weniger, z.B. 10 Zentimeter oder weniger sein. Das Kriterium kann beispielsweise erfüllt sein, wenn der Tiefenwert den Schwellenwert überschreitet.

Das Verfahren 100 kann in 1303 aufweisen, mittels der Bilderfassungsvorrichtung 102 zweite Bilddaten des Erfassungsbereichs 102e (z.B. dessen Referenzebene) zu erfassen, in welchem beispielsweise ein Transportbehälter und optional ein Produkt (auch als Artikel bezeichnet) in dem Transportbehälter angeordnet sind. Die zweiten Bilddaten 202b können Tiefeninformationen und/oder Farbinformationen (z.B. beides gleichzeitig erfasst) aufweisen. Die Tiefeninformationen können beispielsweise die Topografie oberhalb der Referenzebene 902 mittels einer hell/dunkel-Abstufung repräsentieren.

Das Verfahren 100 kann in 101 aufweisen, das Tiefensegmentieren auf die zweiten Bilddaten 202b anzuwenden. Als Ergebnis des Tiefensegmentierens 101 können dritte Bilddaten 212b (auch als segmentierte Bilddaten 212b bezeichnet) bereitgestellt werden. Die dritten Bilddaten 212b können ein oder mehr als ein Objektdatensegment der zweiten Bilddaten 202b aufweisen, welches ein oder mehr als ein bewegliches Objekt (z.B. den Transportbehälter und optional ein Objekt, z.B. Artikel, darin) in dem Erfassungsbereich 102e (bzw. dessen Zone) repräsentiert, und/oder weniger Hintergrunddatensegmente aufweisen als die ersten Bildddaten 202b.

Das Tiefensegmentieren 101 kann beispielsweise aufweisen, die Farbinformationen pixelweise gemäß den Tiefeninformationen herauszufiltern. Beispielsweise kann auf diese Weise jedes Pixel der Bilddaten herausgefiltert werden, dessen zugeordneter Tiefenwert das Kriterium erfüllt. Das Herausfiltern kann beispielsweise aufweisen, diejenigen Pixel der Bilddaten, deren zugeordnete Werte der Tiefeninformationen im Wesentlichen der Referenzebene 902 entsprechen (die beispielsweise anschaulich nicht oberhalb der Referenzebene liegen) zu schwärzen. Als Ergebnis des Maskierens können nur die Pixel des einen oder mehr als einen Objektdatensegments nicht schwarz sein und die restlichen Pixel schwarz sein.

Das Verfahren 100 kann in 103 aufweisen, das Klassifizieren der dritten Bilddaten 212b (d.h. der segmentierten Bilddaten) durchzuführen. Das Klassifizieren 103 kann beispielsweise mittels eines Klassifikators 1307, z.B. mittels eines kNN, erfolgen. Als Ergebnis des Klassifizierens 103 kann den dritten Bilddaten eine Klasse 706 aus mehreren (z.B. zwei oder mehr, z.B. genau drei) Klassen zugeordnet sein. Die mehreren Klassen können beispielsweise aufweisen: die Klasse "leer" und die Klasse "nicht-leer" sowie optional die Klasse "nichts".

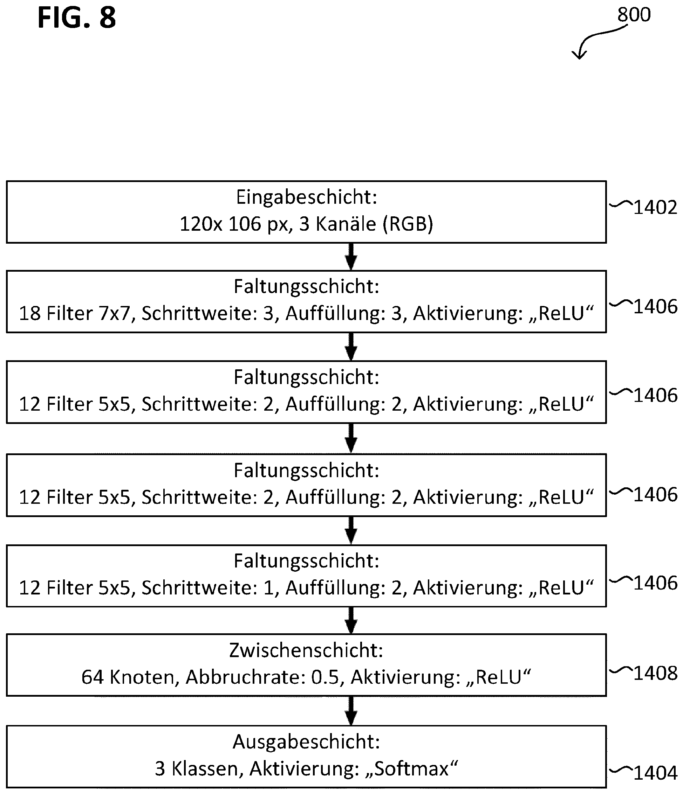

**Fig.8** veranschaulicht den Klassifikator 1307 gemäß verschiedenen Ausführungsformen in einem schematischen Aufbaudiagramm 800, beispielsweise gemäß dem Verfahren 100 eingerichtet und/oder mittels der Steuervorrichtung 106 implementiert. Der Klassifikator 1307 kann als faltendes neuronales Netzwerk eingerichtet sein. Selbstverständlich kann auch ein anders eingerichteter Klassifikator 1307 verwendet werden, welcher die entsprechenden Funktionen bereitstellt.

Der Klassifikator 1307 kann eine Vielzahl von Schichten ("Layer") aufweisen, z.B. zumindest eine Eingabeschicht 1402 ("Input Layer"), zumindest eine Ausgabeschicht 1404 ("Classification Layer", auch als Abschlussschicht bezeichnet) und zwischen diesen eine oder mehr als eine Verarbeitungsschicht 1406, 1408. Die Eingabeschicht 1402 kann beispielsweise eine Auflösung der eingehenden Bilddaten (hier exemplarisch 120 x 106 Pixel) und/oder einen Farbraum für die Farbinformationen der eingehenden Bilddaten definieren (hier exemplarisch RGB). Alternativ oder zusätzlich zu RGB (Rot-Grün-Blau-Farbraum) kann auch jeder andere Farbraum verwendet werden, der sich für den Klassifikator 1307 eignet, z.B. ein anderer technisch-physikalischer Farbraum wie CMYK (Cyan-Magenta-Gelb-Schwarz-Farbraum) oder auch ein perzeptueller Farbraum (der beispielsweise Merkmale wir Helligkeit, Sättigung und Farbton beschreibt) oder ein Grauwert-Farbraum. Im Fall des Grauwert-Farbraums kann im Unterschied zur dargestellten Netzarchitektur nur ein Kanal, z.B. anstatt drei Kanäle im Fall des RGB, verwendet werden. Selbstverständlich kann auch ein anderes Pixelmaß der eingehenden Bilddaten verwendet werden, z.B. 224 x 224 Pixel.

Wird ein faltendes neuronales Netzwerk als Klassifikator 1307 verwendet, kann die eine oder mehr als eine Verarbeitungsschicht zumindest eine Faltungsschicht 1406 ("Convolutional Layer") und zumindest eine Zwischenschicht 1408 ("Fully Connected Layer") aufweisen. Optional kann zwischen der zumindest einen Faltungsschicht 1406 und der zumindest einen Zwischenschicht 1408 (auch als vollverbundene Schicht bezeichnet) eine Bündelungsschicht ("Pooling Layer") geschaltet sein (nicht dargestellt).

Die eingehenden Bilddaten können beispielsweise mehrdimensional sein, z.B. mittels einer entsprechenden Matrix (z.B. die Pixel eines Graustufen- oder Farbbildes) repräsentiert werden. Die Matrix (bei mehr als drei Dimensionen auch als Tensor bezeichnet) kann in einer ersten Dimension beispielsweise eine erste räumliche Koordinate (z.B. x-Koordinate) referenzieren, in einer zweiten Dimension beispielsweise eine zweite räumliche Koordinate (z.B. y-Koordinate) referenzieren, in einer oder mehr als einer dritten Dimension beispielsweise die Farbinformation (z.B. einen Punkt im Farbraum) referenzieren und in einer vierten Dimension beispielsweise die Tiefeninformation (z.B. z-Koordinate) referenzieren. Optional können mittels zusätzlicher Kanäle z.B. auch Infrarotbilder referenziert werden, was somit das Verarbeiten multispektraler Bilder bereitstellt. Die Koordinate der Tiefeninformation kann beispielsweise entlang einer Richtung referenziert werden, die entlang der Richtung des Erfassens der Bilddaten und/oder quer zu der Referenzebene 902 verläuft.

Entsprechend der Dimension der Bilddaten können die Knoten jeder Faltungsschicht 1406 auch mehrdimensional angeordnet sein. Optional kann das Tiefensegmentieren aufweisen, die Dimension der Tiefeninformation zu entfernen zum Bilden der gefilterten Bilddaten. Alternativ oder zusätzlich kann das Tiefensegmentieren aufweisen, diejenigen Einträge der Farbinformationen des Tensors, an denen die Tiefeninformation einen Schwellenwert überschreitet, gegen Nullen zu ersetzen.

Die Aktivität jedes Knotens einer Faltungsschicht 1406 kann mittels einer diskreten Faltung berechnet werden. Die diskrete Faltung jedes Knotens kann von einer Aktivierungsfunktion in eine Ausgabe des Knotens überführt werden. Als Aktivierungsfunktion kann beispielsweise eine ReLU-Funktion verwendet werden. Im Kontext künstlicher neuronaler Netze oder Trainingsverfahren ist eine ReLU-Funktion (auch als Rectifier-Funktion, Gleichrichter-Funktion oder kurz auch als ReLU bezeichnet) eine Aktivierungsfunktion, die im Wesentlichen als Positivteil ihres Arguments definiert ist.

Mehrere Parameter steuern den Umfang der Ausgabe (auch als Ausgangsvolumen bezeichnet) einer Faltungsschicht 1406, beispielsweise die Parameter Filteranzahl ("depth"), Schrittweite ("stride") und Auffüllung ("Padding" oder "Null-Padding").

Die Filteranzahl entspricht der Anzahl der Filter (hier exemplarisch 18 Filter oder 12 Filter), die verwendet werden, wobei jeder der Filter trainiert wird, nach etwas anderem (z.B. spezifischen Strukturen) in den Eingangsdaten der Faltungsschicht 1406 zu suchen. Die Größe eines Filters kann in Pixel angegeben werden (hier exemplarisch 7 x 7 Pixel oder 5 x 5 Pixel). Wenn beispielsweise die Bilddaten im Rohdatenformat (auch als Rohbilddaten bezeichnet) als Eingangsdaten der ersten Faltungsschicht 1406 zugeführt werden, können verschiedene Knoten entlang der Tiefenabmessung in Gegenwart verschiedener orientierter Kanten oder Farbflecken aktiviert werden. Die Schrittweite gibt an, wie weit ein Filter verschoben wird. Wenn die Schrittweite gleich 1 ist, dann wird ein Filter um ein Pixel verschoben. Wenn die Schrittweite 2 bzw. 3 ist, dann wird der Filter 2 bzw. 3 Pixel auf einmal verschoben. Dadurch werden räumlich kleinere Leistungsvolumen erzeugt. Im Verlauf vom Eingang zum Ausgang des Klassifikators 1307 kann die Schrittweite der Faltungsschichten 1406 abnehmen (hier exemplarisch von 3 auf 1). Mittels des Null-Paddings können Eingangsdaten mit Nullen am Rand gefüllt werden. Dies erlaubt, die räumliche Größe der Ausgabedaten einer Faltungsschicht 1406 zu kontrollieren.

Die zumindest eine (d.h. eine oder mehr als eine) Abschlussschicht 1404 kann das Netzwerk entsprechend der Architektur des mehrlagigen Perzeptrons abschließen.

Diese Abschlussschicht 1404 hat beispielsweise drei Knoten für drei Klassen ("nichts", "leer", "nicht-leer"). Die vorgelagerte Zwischenschicht 1408 ist eine sogenannte verstecke Schicht ("hidden layer"). Diese Zwischenschicht 1408 ermöglicht, verschiedene Entscheidungswege zwischen der letzten faltenden Schicht 1406 und der eigentlichen Klassifizierung 1404 abzubilden. Diese, sehr redundante, sogenannte 1-aus-n-Kodierung ("One-Hot-encoding") hat den Vorteil, dass nicht notwendigerweise implizite Annahmen über Ähnlichkeiten von Klassen gemacht werden müssen.

Anschaulich kann der Block 1406 aus faltenden Schichten die Funktion der Merkmalsextraktion ("feature extraction") und die diesem Block nachgeschaltete eine oder mehr als eine vollverbundene Zwischenschicht 1408 die Funktion der Entscheidungsfindung ("decision making") bereitstellen, z.B. anhand der zuvor extrahierten Merkmale. Man könnte diese Merkmale, bzw. deren Vorhandensein in verschiedenen Regionen auch direkt an die Abschlussschicht 1404 übergeben, was allerdings die möglichen Entscheidungswege begrenzt und unter Umständen, je nach vorliegenden Randbedingungen, nicht ausreichend sein kann.

Ein ähnlich großes neuronales Netz als Klassifikator 1307, das allgemeingültigere Probleme löst, weist zwei oder mehr solcher Zwischenschichten 1408 für die Entscheidungsfindung auf.

Da eine Zwischenschicht 1408 die meisten Parameter annimmt, ist sie anfällig für eine Überanpassung. Um dieser Überanpassung entgegenzuwirken, kann dieser eine sogenannte Abbruchrate p ("dropout rate") vorgegeben werden. Dazu werden pro Trainingsphase einzelne Knoten mit der Wahrscheinlichkeit 1-p aus dem Netzwerk entfernt (hier ist exemplarisch p=0,5) oder mit der Wahrscheinlichkeit p behalten, so dass ein reduziertes Netzwerk übrig bleibt. In der Trainingsphase wird dann nur das reduzierte Netzwerk auf die Daten dieser Trainingsphase trainiert. Nach der Trainingsphase werden die entfernten Knoten wieder mit ihren ursprünglichen Gewichten dem Netzwerk hinzugefügt.

Die Ausgabeschicht 1404 (auch als Klassifikationsschicht bezeichnet) kann die Ausgabe der zumindest einen Zwischenschicht 1408 in die entsprechenden Klassen überführen. Beispielsweise kann die Ausgabeschicht 1404 einen K-dimensionalen Vektor σ (hier ist K exemplarisch 3) ausgeben und eine Softmax-Funktion als Aktivierungsfunktion verwendet werden. Die sogenannte Softmax-Funktion (kurz auch als Softmax oder normalisierte Exponentialfunktion bezeichnet) ist eine Generalisierung der logistischen Funktion, die einen K-dimensionalen Vektor mit reellen Komponenten in einen K-dimensionalen Vektor σ ebenfalls als Vektor reeller Komponenten in den Wertebereich (0, 1) transformiert, wobei sich die Komponenten zu 1 aufsummieren.

Die Anzahl der Knoten (hier exemplarisch 64) einer Zwischenschicht 1408 korrespondiert beispielsweise zu der Anzahl an (Objekt-)Klassen, die die folgende Abschlussschicht 1404 unterscheiden soll und zu der Anzahl von möglichen Strukturanordnungen, die die vorherige Schicht 1406 extrahiert.

Beispiele für die Trainingsdaten zum Trainieren des Klassifikators 1307 können aufweisen: Bilddaten des leeren Erkennungsbereichs, Bilddaten des Erkennungsbereichs mit leerem Transportbehälter, Bilddaten des Erkennungsbereichs mit Transportbehälter und darin angeordnetem unbedenklichen Objekt, Bilddaten des Erkennungsbereichs mit Transportbehälter und darin angeordneten Artikel (d.h. bedenkliches Objekt). Beispiele für Zielgröße zum Trainieren des Klassifikators 1307 können die mehreren Bildklassen aufweisen.

Alternativ oder zusätzlich mögliche Beispiele für Trainingsdaten können aufweisen, dass die Tiefeninformation, auch zum Trainieren des Klassifikators 1307 verwendet wird, so dass diese anschaulich nicht zwangsläufig nur zum Tiefensegmentieren verwendet werden muss.

Alternativ oder zusätzlich mögliche Beispiele für Zielgrößen zum Trainieren des Klassifikators 1307 können aufweisen, dass die Klasse "nicht-leer" weiter unterteilt wird, um das Erscheinungsbild der Artikel mit einen oder mehr als einem Referenzerscheinungsbild zu vergleichen. Vereinfacht gesagt kann beispielsweise sicherzustellt werden, dass der Gegenstand (Objekt), der in dem Transportbehälter ist angeordnet ist, auch tatsächlich ein Artikel ist, für den ein betrügerisches Verhalten überhaupt auftreten kann (der beispielsweise kein Eigentum des Kunden ist), d.h. welcher auch bedenklich ist.

Beispiele für den Klassifikator 1307 können verschiedene Formen des maschinellen Lernens zur Bildklassifikation aufweisen, wie beispielsweise
- das sogenannte "Histogram of oriented gradients" (HOG) in Kombination mit einer Stützvektormaschine (SVM);
- ein vortrainiertes kNN mit "Standard-Architektur" (z.B. GoogLeNet), das ferner per "Transferlernen" und Feinanpassung auf das gegebene Problem angepasst wird.

Letzteres bringt allerdings für das gegebene Problem höhere Hardware-Anforderungen und/oder höhere Fehlerraten mit sich, da die Vortrainingsdatenbank sehr verschieden ist zu den hier betrachteten Eingangsvektoren mit sich.

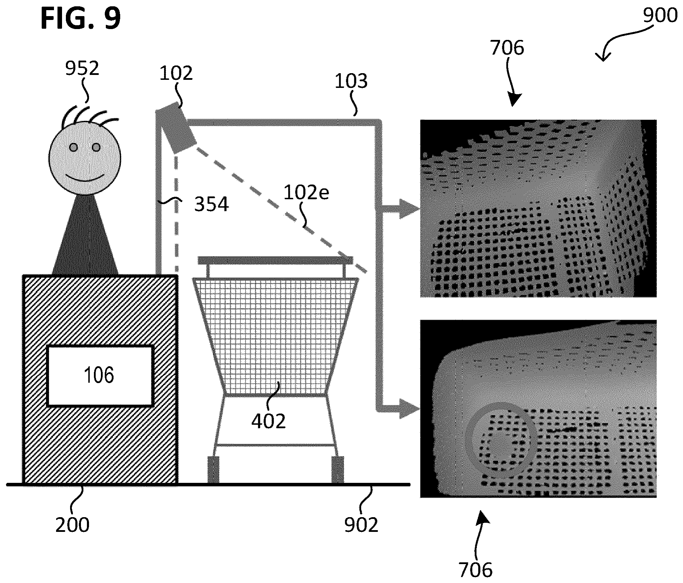

**Fig.9** veranschaulicht ein Registrierterminal 200 in dem Verfahren 100 gemäß verschiedenen Ausführungsformen in einer schematischen Seitenansicht 900.

Die Nutzung des 3D-Bildes (d.h. Tiefenbildes) dient gemäß verschiedenen Ausführungsformen zur Eingrenzung des überwachten Bildbereiches und erhöht die Robustheit des leer-Erkennens. Weiterhin werden datenschutzrechtlich relevante Informationen auf ein geringes Maß reduziert, so dass eine bildliche Erkennung von Personen und damit eine mögliche Verletzung von persönlichen Daten unwahrscheinlich wird.

Das Anbringen einer 3D-Kamera 102 an das PoleMount-System 354 des Kassenmöbels 200 kann derart erfolgen, dass dessen Perspektive von schräg oben ist und/oder zumindest teilweise nach unten gerichtet ist. Die Perspektive (anschaulich Blickwinkel) der 3D-Kamera 102 lässt sowohl eine Abbildung des Korbbodens (allgemeiner Boden des Transportbehälters 402), des Inneren des Transportbehälters 402, als auch des unteren Ablagebereichs des Transportbehälters 402 (z.B. eines Einkaufswagens) zu. Die Kamera 102 kann 3D-Bilder des Transportbehälters 402 bereitstellen, beispielsweise ausgeben. Mittels der Tiefeninformation der 3D-Bilder kann der Hintergrund, d.h. der Fußboden 902, anhand der Tiefeninformation ausgeblendet werden. Auch Umwelteinflüsse und farbliche Variationen des Transportbehälters 402 bzw. der im Transportbehälter liegenden Artikel beeinflussen das 3D-Bild nicht. Übrig bleibt also eine prototypische Silhouette eines Transportbehälters 402, die beispielsweise zu dem für einen Großteil aller auf dem Markt vorhandenen Transportbehälters 402 im Wesentlichen vergleichbar ist. Ein Algorithmus 1307 basierend auf einem faltenden neuronalen Netzwerk klassifiziert die so aufgenommenen Tiefenprofile in drei verschiedene Klassen:
- "nichts" (Situationen, in denen alles außer ein Einkaufswagen bzw. ein partieller Einkaufswagen zu sehen ist);
- "leer" (Situationen, in denen ein Einkaufswagen vollständig zu sehen ist, der keinen Artikel enthält);
- "nicht-leer" (Situationen, in denen ein Einkaufswagen vollständig zu sehen ist, der mindestens einen Artikel enthält).

Die universelle 3D-Gitterstruktur eines Korbs (z.B. als Handkorb oder Teil eines Einkaufswagens) ermöglicht den Einsatz eines hoch optimierten kNN, das im Unterschied zu herkömmlichen Ansätzen der Objekterkennung eine sehr robuste, aber dennoch sehr schnelle Klassifikation von Bildern ermöglicht. Somit benötigen diese Algorithmen keinerlei zusätzliche Computer-Hardware und können auf der vorhandenen Steuervorrichtung 106 eines Verkaufspunkts 200 (POS - "point of sale") betrieben werden. Die Steuervorrichtung 106 kann beispielsweise mittels eines PC bereitgestellt sein oder werden.

Das Klassifizieren der erfassten Bilddaten (z.B. eines Videos) kann als Ergebnis beispielsweise im zeitlichen Ablauf folgende Klassen nacheinander ausgeben: "nichts" -> "nicht-leer" -> "nichts". Ein solcher zeitlicher Ablauf löst dann beispielsweise einen stillen Alarm als Signal 302 bei dem Kassierer 952 aus, so dass dieser gezielt einen Transportbehälter 402, der als nicht-leer erkannt wurde, auf nicht eingescannte Artikel inspizieren kann.

Die Steuervorrichtung 106 kann beispielsweise den Alarm derart bereitstellen, dass das Registrierterminal auffordert, diesen nach der Inspektion des Transportbehälters 402 zu quittieren. Alternativ oder zusätzlich kann als Signal 302 ein Video (z.B. eine Folge von Farbbildern aufweisend) des unmittelbar erfassten Erfassungsbereich ausgegeben werden, der alternativ oder zusätzlich zu dem stillen Alarm auf der Informationsausgabevorrichtung 124 (z.B. einem Monitor) ausgegeben wird. Das Video kann beispielsweise das Ereignis des vorbeifahrenden Transportbehälters 402 zeigen, z.B. in einer Endlosschleife. Die für das leer-Erkennen nicht relevanten Objekte, wie z.B. Kassenbons oder persönliche Gegenstände des Kunden, können von dem Kassierer 952 leicht identifiziert werden, ohne den Prozess maßgeblich zu unterbrechen.

Das hierein beschriebene Verfahren 100 kann, wie in 900 gezeigt, auf ein bemanntes Registrierterminal (d.h., welches von einem Kassierer bedient wird) angewendet werden und/oder analog dazu auf ein Selbstbedienung-Registrierterminal angewendet werden.

Im Fall des Selbstbedienung-Registrierterminals kann als Signal 302 beispielsweise ein Alarm an einen Mitarbeiter ausgegeben werden, wobei der Alarm beispielsweise das Selbstbedienung-Registrierterminal identifiziert, von welchem der Alarm ausgegeben wurde. Alternativ oder zusätzlich kann an einem Selbstbedienung-Registrierterminal in Reaktion auf die Erkennung eines nicht-leeren Transportbehälters (z.B. Tragekorbs) die Registriersitzung 202 mittels des Signals 302 in einen Wartezustand versetzt werden. Alternativ oder zusätzlich kann an einem Selbstbedienung-Registrierterminal in Reaktion auf die Erkennung eines leeren Transportbehälters (z.B. Tragekorbs) mittels des Signals 302 die Registriersitzung 202 fortgesetzt werden, beispielsweise das Initiieren oder Durchführen des Bezahlprozesses freigegeben werden.

Herkömmlichen Mechanismen zum leer-Erkennen weisen beispielsweise auf: eine Spiegellösung an der Decke oder am gegenüberliegenden Kassenmöbel, eine Ausgabe eines permanenten (oder durch Lichtschranken ausgelösten) Kamera-Stream auf dem Monitor des Kassierers, eine ID-Nummern am Fahrgestell des Einkaufswagens, die zur Freigabe der Zahlung eingegeben werden müssen und so den Kassierer zwingen sollen, den Wagen zu inspizieren. Diese Mechanismen verlangen die permanente Aufmerksamkeit des Kassierers, die naturgemäß nachlassen kann. Demgegenüber kann die Aufmerksamkeit des Kassierers für das hierin beschriebene Verfahren 100 nur auf den Fall eines als nicht-leer erkannten Transportbehälters 402 bzw. dessen Inspektion konzentriert werden. Diese wird darüber hinaus durch eine Wiedergabe der aufgezeichneten Bilddaten des vorbeifahrenden Transportbehälters 402 erleichtert.

Herkömmliche Mechanismen zum leer-Erkennen weisen beispielsweise auf: eine sogenannte DataLogic Lanehawk, die eine 1:1-Identifikation von Artikeln auf der unten Wagen-Ablage via Kamera und Objekterkennung durchführt. Eine solche 1:1-Identifikation von Artikeln mittels Objekterkennung ist sehr fehleranfällig. Darüber hinaus müssen ständige Variationen des Sortiments bzw. der Verpackungen von Artikeln durch erneutes Training des Algorithmus abgefangen werden. Auch deckt diese 1:1-Identifikation nur die untere Ablage des Wagens ab. Demgegenüber ist das Verfahren 100 gemäß verschiedenen Ausführungsformen unabhängig vom Erscheinungsbild des Artikels und deckt darüber hinaus eine oder mehr als eine Ablage (z.B. Boden) des Transportbehälters ab.

Herkömmlichen Mechanismen zum leer-Erkennen weisen beispielsweise auf: einen sogenannten StopLift, welcher eine Decken-Sicherheitskamera zur Aufnahme von Farbbildern nutzt und einen Referenz-Bild-Vergleich mit leeren Einkaufswagen zur Erkennung von nicht-leeren Einkaufswagen durchführt. Die Verwendung herkömmlicher Farbbilder zur Objekterkennung ist mit hohen Fehlerraten behaftet. Fehlerquellen sind variierende Bauarten von Einkaufswagen, Lichtverhältnisse und Hintergründe (beispielsweise am Fußboden oder Verschmutzungen). Dazu kommen eine suboptimale Perspektive und Auflösung durch die Verwendung von Deckenkameras. Demgegenüber ermöglicht das Verfahren 100 gemäß verschiedenen Ausführungsformen eine sehr kleine Fehlerrate (z.B. <5%) unabhängig vom Standort und dem Typ des Einkaufswagens.

Herkömmlichen Mechanismen zum leer-Erkennen weisen beispielsweise auf: einen CaddyCheck, der eine Erkennung von Einkaufswagen mithilfe selbstlernender Algorithmen durchführt, was ein Anlernen für jeden POS-Typ benötigt. Demgegenüber sind lange Anlernprozeduren von mehreren Wochen an dem jeweiligen Verwendungsort (d.h. dem Kassenarbeitplatz) bei dem Verfahren 100 gemäß verschiedenen Ausführungsformen nicht unbedingt erforderlich.

Gemäß verschiedenen Ausführungsformen kann der Transportbehälter einen Einkaufswagen, einen Einkaufskorb oder einen anderen Wagen (und/oder Korb), einen Tragekorb oder Ähnliches aufweisen oder daraus gebildet sein. Alternativ oder zusätzlich kann der Transportbehälter (z.B. dessen Boden) ein Gitter aufweisen oder daraus gebildet sein oder zumindest teilweise (z.B. zumindest dessen Boden) nichtblickdicht sein. Gemäß verschiedenen Ausführungsformen kann der Transportbehälter, z.B. der Einkaufswagen, ein Fahrgestell aufweisen. Das Fahrgestell kann zumindest drei, z.B. zumindest vier, Räder aufweisen.

Gemäß verschiedenen Ausführungsformen kann der Transportbehälter Kunststoff und/oder ein Metall aufweisen oder daraus gebildet sein, z.B. Aluminium und/oder Stahl.

Gemäß verschiedenen Ausführungsformen kann der Transportbehälter eine Griffleiste bzw. einen schwenkbaren Henkel mit Griffleiste aufweisen.

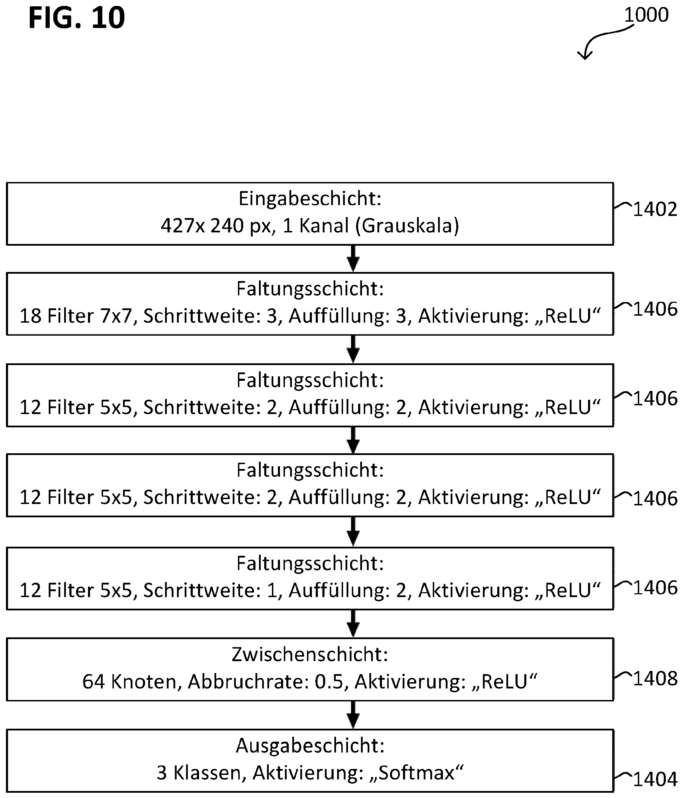

**Fig.10** veranschaulicht den Klassifikator 1307 gemäß verschiedenen Ausführungsformen in einem schematischen Aufbaudiagramm 1000, beispielsweise gemäß dem Verfahren 100 eingerichtet und/oder mittels der Steuervorrichtung 106 implementiert. Die Ausführungen zu Fig.8 gelten hier analog.

Beansprucht ist ein Registrierterminal (z.B. einen Kassierer-Arbeitsplatz aufweisend oder ein Selbstbedienung-Registrierterminal), aufweisend: eine Bilderfassungsvorrichtung, welche eingerichtet ist, die Bilddaten zu erfassen; eine Produkterfassungsvorrichtung zum Erfassen einer Produktkennung eines Produkts, wenn das Produkt der Produkterfassungsvorrichtung präsentiert wird; eine Steuervorrichtung gemäß Beispiel 22, welche ferner eingerichtet ist zum Ermitteln von Zahlungsinformationen basierend auf der Produktkennung, wobei die Bilderfassungsvorrichtung (z.B. deren Erfassungsrichtung) beispielsweise zumindest teilweise nach unten ausgerichtet ist (d.h. dass deren Erfassungsrichtung zumindest eine Richtungskomponente aufweist, die parallel zu der Gravitationsrichtung ist).

## Patentansprüche

1. Verfahren (100) zum rechnergestützten Leer-Erkennen eines Transportbehälters (402), das Verfahren (100) aufweisend:
• Ermitteln (101) eines oder mehr als eines Segments von Bilddaten unter Verwendung von den Bilddaten zugeordneten Tiefeninformationen; wobei die Tiefeninformationen den Bilddaten pixelweise zugeordnete Tiefenwerte aufweisen und die Bilddaten unter Verwendung der Tiefeninformationen segmentiert werden, wobei ein Tiefenwert des einen oder mehr als einen Segments größer als ein abgespeicherter Schwellenwert ist, wobei das eine oder mehr als eine Segment ein oder mehrere Pixel aufweist;
• Zuordnen (103) der Bilddaten zu einer aus mehreren Klassen, von denen eine erste Klasse repräsentiert, dass der Transportbehälter (402) leer ist, und eine zweite Klasse repräsentiert, dass der Transportbehälter (402) nicht-leer ist, wobei beim Zuordnen das eine oder mehr als eine Segment unberücksichtigt bleibt;
• Ausgeben (105) eines Signals, welches repräsentiert, dass die Bilddaten der zweiten Klasse zugeordnet sind;
• wobei das eine oder mehr als eine Segment einen Hintergrund des Transportbehälters (402) repräsentiert.

2. Verfahren (100) gemäß Anspruch 1, wobei das eine oder mehr als eine Segment ermittelt wird, wenn eine dem Segment zugeordnete Tiefeninformation ein abgespeichertes Kriterium erfüllt.

3. Verfahren (100) gemäß einem der Ansprüche 1 bis 2, wobei das eine oder mehr als eine Segment der Bilddaten derart herausgefiltert wird, dass es beim Zuordnen nicht berücksichtigt wird.

4. Verfahren (100) gemäß einem der Ansprüche 1 bis 3, wobei mittels des Herausfilterns eine Kontur des Transportbehälters (402) freigestellt wird.

5. Verfahren (100) gemäß einem der Ansprüche 1 bis 4, wobei das Zuordnen (103) mittels eines Klassifikators (1307) erfolgt, der als faltendes neuronales Netzwerk eingerichtet ist,
wobei der Klassifikator (1307) eine Eingabeschicht (1402) und eine Ausgabeschicht (1404) und zwischen der Eingabeschicht (1402) und der Ausgabeschicht (1404) eine Verarbeitungsschicht (1406, 1408) aufweist,
wobei die dem Zuordnen (103) zugeführten Bilddaten in die Eingabeschicht (1402) eingehen und mittels einer Matrix repräsentiert werden, wobei die Matrix in einer ersten Dimension eine erste räumliche Koordinate, in einer zweiten Dimension eine zweite räumliche Koordinate, in einer dritten Dimension Farbinformation, in einer vierten Dimension die Tiefeninformation aufweist.

6. Verfahren (100) gemäß einem der Ansprüche 1 bis 5, wobei das Signal eine Instruktion aufweist, eine Registriersitzung in einen Wartezustand zu versetzen.

7. Verfahren (100) gemäß Anspruch 6, die Registriersitzung aufweisend:
• Ermitteln von Zahlungsinformationen basierend auf einer Produktkennung;
• Initiieren eines Bezahlprozesses auf Grundlage der Zahlungsinformationen.

8. Verfahren (100) gemäß einem der Ansprüche 1 bis 7, wobei das Signal eine Instruktion aufweist, Farbinformationen der Bilddaten des Transportbehälters (402) anzuzeigen.

9. Verfahren (100) gemäß einem der Ansprüche 1 bis 8, wobei das Signal eine Instruktion aufweist, eine Benutzereingabe anzufordern.

10. Verfahren (100) gemäß einem der Ansprüche 1 bis 9, wobei das Signal eine Instruktion aufweist, einen Alarm auszugeben.

11. Verfahren (100) gemäß einem der Ansprüche 1 bis 10, wobei die Bilddaten stereoskopische Bilddaten aufweisen und die Tiefeninformationen auf Grundlage der stereoskopischen Bilddaten ermittelt werden.

12. Verfahren (100) gemäß einem der Ansprüche 1 bis 11, wobei das Zuordnen der Bilddaten zu einer aus mehreren Klassen mittels eines künstlichen neuronalen Netzes erfolgt.

13. Steuervorrichtung (106), die eingerichtet ist, das Verfahren (100) gemäß einem der Ansprüche 1 bis 12 durchzuführen.

14. Registrierterminal (200), aufweisend:
• eine Steuervorrichtung (106) gemäß Anspruch 13,
• eine Bilderfassungsvorrichtung (102), welche eingerichtet ist, die Bilddaten zu erfassen;
• eine Produkterfassungsvorrichtung (104) zum Erfassen einer Produktkennung eines Produkts, wenn das Produkt der Produkterfassungsvorrichtung präsentiert wird; und
• wobei die Steuervorrichtung (106) ferner eingerichtet ist zum Ermitteln von Zahlungsinformationen basierend auf der Produktkennung.

15. Nicht-flüchtiges Speichermedium, das Codesegmente aufweist, die, wenn von einem Prozessor ausgeführt, den Prozessor dazu bringen, das Verfahren gemäß einem der Ansprüche 1 bis 12 durchzuführen.

## Claims

1. Method (100) for the computer-aided detection of an empty transport container (402), the method (100) comprising:
• determining (101) one or more than one segment of image data using depth information assigned to the image data; wherein the depth information has depth values assigned pixel-by-pixel to the image data and the image data are segmented using the depth information, wherein a depth value of the one or more than one segment is greater than a stored threshold value, wherein the one or more than one segment has one or more pixels;
• assigning (103) the image data to one of a plurality of classes, a first class of which represents the transport container (402) being empty, and a second class of which represents the transport container (402) not being empty, wherein the one or more than one segment is not taken into account during assignment;
• outputting (105) a signal which represents the image data being assigned to the second class;
• wherein the one or more than one segment represents a background of the transport container (402).

2. Method (100) according to Claim 1, wherein the one or more than one segment is determined if depth information assigned to the segment satisfies a stored criterion.

3. Method (100) according to one of Claims 1 to 2, wherein the one or more than one segment of the image data is filtered out in such a way that it is not taken into account during assignment.

4. Method (100) according to one of Claims 1 to 3, wherein a contour of the transport container (402) is released by means of the filtering out.

5. Method (100) according to one of Claims 1 to 4, wherein the assignment (103) is carried out by means of a classifier (1307) configured as a convolutional neural network,
wherein the classifier (1307) has an input layer (1402) and an output layer (1404) and a processing layer (1406, 1408) between the input layer (1402) and the output layer (1404),
wherein the image data supplied to the assigned (103) enter the input layer (1402) and are represented by means of a matrix, wherein the matrix has a first spatial coordinate in a first dimension, a second spatial coordinate in a second dimension, colour information in a third dimension, and the depth information in a fourth dimension.

6. Method (100) according to one of Claims 1 to 5, wherein the signal has an instruction to change a registration session to a waiting state.

7. Method (100) according to Claim 6, the registration session comprising:
• determining payment information based on a product identifier;
• initiating a payment process based on the payment information.

8. Method (100) according to one of Claims 1 to 7, wherein the signal has an instruction to display colour information of the image data relating to the transport container (402).

9. Method (100) according to one of Claims 1 to 8, wherein the signal has an instruction to request a user input.

10. Method (100) according to one of Claims 1 to 9, wherein the signal has an instruction to output an alarm.

11. Method (100) according to one of Claims 1 to 10, wherein the image data have stereoscopic image data and the depth information is determined on the basis of the stereoscopic image data.

12. Method (100) according to one of Claims 1 to 11, wherein the image data are assigned to one of a plurality classes by means of an artificial neural network.

13. Control device (106) which is configured to carry out the method (100) according to one of Claims 1 to 12.

14. Registration terminal (200), comprising:
• a control device (106) according to Claim 13,
• an image capture device (102) configured to capture the image data;
• a product capture device (104) for capturing a product identifier of a product when the product is presented to the product capture device; and
• wherein the control device (106) is further configured to determine payment information based on the product identifier.

15. Non-volatile storage medium comprising code segments which, when executed by a processor, cause the processor to carry out the method according to one of Claims 1 to 12.

## Revendications

1. Procédé (100) pour la reconnaissance assistée par ordinateur d'un récipient de transport (402), le procédé (100) comprenant :
• la détermination (101) d'un ou de plusieurs segments de données d'image en utilisant des informations de profondeur associées aux données d'image ; les informations de profondeur comprenant des valeurs de profondeur associées aux données d'image pixel par pixel et les données d'image étant segmentées en utilisant les informations de profondeur, une valeur de profondeur du ou des segments étant supérieure à une valeur de seuil mémorisée, le ou les segments comprenant un ou plusieurs pixels ;
• l'association (103) des données d'image à l'une de plusieurs classes, dont une première classe représente le fait que le récipient de transport (402) est vide, et une deuxième classe représente le fait que le récipient de transport (402) n'est pas vide, le ou les segments n'étant pas pris en compte lors de l'association ;
• l'émission (105) d'un signal qui représente le fait que les données d'image sont associées à la deuxième classe ;
• dans lequel le ou les segments représentent un arrière-plan du récipient de transport (402).

2. Procédé (100) selon la revendication 1, dans lequel le ou les segments sont déterminés lorsqu'une information de profondeur associée au segment satisfait à un critère mémorisé.

3. Procédé (100) selon l'une quelconque des revendications 1 à 2, dans lequel le ou les segments des données d'image sont filtrés de telle sorte qu'ils ne soient pas pris en compte lors de l'association.

4. Procédé (100) selon l'une quelconque des revendications 1 à 3, dans lequel un contour du récipient de transport (402) est dégagé par le filtrage.

5. Procédé (100) selon l'une quelconque des revendications 1 à 4, dans lequel l'association (103) s'effectue au moyen d'un classificateur (1307) qui est conçu sous forme de réseau neuronal convolutif,
le classificateur (1307) comprenant une couche d'entrée (1402) et une couche de sortie (1404) et, entre la couche d'entrée (1402) et la couche de sortie (1404), une couche de traitement (1406, 1408),
les données d'image fournies à l'association (103) entrant dans la couche d'entrée (1402) et étant représentées au moyen d'une matrice, la matrice présentant dans une première dimension une première coordonnée spatiale, dans une deuxième dimension une deuxième coordonnée spatiale, dans une troisième dimension une information de couleur et dans une quatrième dimension l'information de profondeur.

6. Procédé (100) selon l'une quelconque des revendications 1 à 5, dans lequel le signal comprend une instruction pour mettre une session d'enregistrement dans un état d'attente.

7. Procédé (100) selon la revendication 6, la session d'enregistrement comprenant :
• la détermination d'informations de paiement sur la base d'un identifiant de produit ;
• le déclenchement d'un processus de paiement sur la base des informations de paiement.

8. Procédé (100) selon l'une quelconque des revendications 1 à 7, dans lequel le signal comprend une instruction pour afficher des informations de couleur des données d'image du récipient de transport (402).

9. Procédé (100) selon l'une quelconque des revendications 1 à 8, dans lequel le signal comprend une instruction pour demander une entrée utilisateur.

10. Procédé (100) selon l'une quelconque des revendications 1 à 9, dans lequel le signal comprend une instruction pour émettre une alarme.

11. Procédé (100) selon l'une quelconque des revendications 1 à 10, dans lequel les données d'image comprennent des données d'image stéréoscopiques et les informations de profondeur sont déterminées sur la base des données d'image stéréoscopiques.

12. Procédé (100) selon l'une quelconque des revendications 1 à 11, dans lequel l'association des données d'image à l'une des multiples classes s'effectue au moyen d'un réseau neuronal artificiel.

13. Dispositif de commande (106) qui est conçu pour mettre en œuvre le procédé (100) selon l'une quelconque des revendications 1 à 12.

14. Terminal d'enregistrement (200), comprenant :
• un dispositif de commande (106) selon la revendication 13 ;
• un dispositif de détection d'image (102) qui est conçu pour détecter les données d'image ;
• un dispositif de détection de produit (104) destiné à détecter un identifiant de produit d'un produit lorsque le produit est présenté au dispositif de détection de produit ; et
• le dispositif de commande (106) étant en outre conçu pour déterminer des informations de paiement sur la base de l'identifiant de produit.

15. Support de stockage non volatil comprenant des segments de code qui, lorsqu'ils sont exécutés par un processeur, amènent le processeur à mettre en œuvre le procédé selon l'une quelconque des revendications 1 à 12.
